# EUROPEAN PATENT APPLICATION

(11) **EP 4 645 946 A1**
(43) Date of publication of application: **05.11.2025**
(21) Application number: 23910639.6
(22) Date of filing: 26.12.2023
(51) Int. Cl.: H04W 28/02

(54) **COMMUNICATION METHOD, COMMUNICATION DEVICE, AND COMPUTER READABLE STORAGE MEDIUM**

(30) Priority: 31.12.2022 CN 202211738219
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); YAO, Chuting, Shenzhen, Guangdong 518129 (CN)
(74) Representative: Maiwald GmbH
(86) International application number: PCT/CN2023/142046
(87) International publication number: WO 2024/140716

(57) **Abstract**

Embodiments of this application provide a communication method, a communication device, a computer-readable storage medium, and a computer program product. The communication method includes: determining first information, where the first information includes first congestion indication information, the first congestion indication information indicates congestion information of a relay terminal device, and the relay terminal device provides a relay service between a remote terminal device and a network device; and sending the first information to the network device. In this manner, congestion control related information reported by the relay terminal device can be directly obtained in a data transmission process, so that corresponding configuration update or traffic control is performed based on the reported congestion indication information, to avoid or reduce congestion on the relay terminal device.

## Description

This application claims priority to Chinese Patent Application No. 202211738219.2, filed with the China National Intellectual Property Administration on December 31, 2022 and entitled "COMMUNICATION METHOD, COMMUNICATION DEVICE, AND COMPUTER-READABLE STORAGE MEDIUM", which is incorporated herein by reference in its entirety.

### TECHNICAL FIELD

This application generally relates to the communication field, and more specifically, to a communication method, a communication device, and a computer-readable storage medium.

### BACKGROUND

To further expand network and sidelink (Sidelink, SL) coverage, improve power efficiency, and support wider applications and services, the 3rd Generation Partnership Project (3rd Generation Partnership Project, 3GPP) introduces a sidelink user equipment-to-network (User Equipment-to-Network, U2N) relay technology, also referred to as a relay technology, in R17, so that one user equipment (User Equipment, UE) helps another UE communicate with a base station. On the basis of R17, more new scenarios are further studied and discussed in a sidelink relay enhancement project in R18, to expand the network coverage, improve network capacities and reliability, and improve user experience.

As an evolution of the R17 U2N relay technology, a multi-path relay architecture is introduced and studied by 3GPP in R18. In the multi-path relay architecture, a remote UE communicates with a base station through both a direct link and an indirect link, so that throughput rates and reliability of data sending and receiving can be improved. However, a communication system in the multi-path relay architecture still has some problems that need to be resolved.

### SUMMARY

Embodiments of this application provide a communication method, a communication device, and a computer-readable storage medium, to directly obtain, in a data transmission process, congestion control related information reported by a relay terminal device, and therefore perform corresponding configuration update or traffic control based on reported congestion indication information.

According to a first aspect of this application, a communication method applied to a relay terminal device is provided. The method includes: determining first information, where the first information includes first congestion indication information, the first congestion indication information indicates congestion information of the relay terminal device, and the relay terminal device provides a relay service between a remote terminal device and a network device; and sending the first information to the network device. In this manner, the network device may directly obtain the congestion information of the relay terminal device in a data transmission process of the remote terminal device.

In some embodiments, the congestion information includes one or more of the following: sequence number information of a data packet transmitted by the relay terminal device; data transmission delay information of the relay terminal device; buffer indication information of the relay terminal device, where the buffer indication information indicates buffer information of the relay terminal device; or transmission rate information of the relay terminal device. In this way, a specific data transmission status of the relay terminal device may be obtained based on content of the congestion message.

In some embodiments, the sending the first information to the network device includes one or more of the following: periodically sending the first information; sending the first information after a first condition is met, where the first condition is configured by the network device, and the first condition is applied to one or both of the following: a data transmission delay or a volume of buffered data on the relay terminal side; or sending the first information in response to a request message from the network device, where the request message indicates the relay terminal device to send the first information. In this way, an occasion for reporting the congestion information may be determined, to avoid sending disorder and reduce signaling overheads.

In some embodiments, the congestion information of the relay terminal device includes congestion information corresponding to one or more of the following: a radio bearer for the remote terminal device, where the radio bearer is for data transmission between the remote terminal device and the network device; the relay terminal device; the remote terminal device; or a relay radio link control RLC channel, where the relay radio link control RLC channel is configured by the network device to carry radio bearer data for the remote terminal device between the remote terminal device and the relay terminal device or between the relay terminal device and the network device. In this way, congestion information of different granularities may be reported, to flexibly control overheads.

In some embodiments, the first information further includes one or more of the following: a first identifier ID of the remote terminal device, a first ID of the relay terminal device, a first ID of the radio bearer, a first ID of the relay RLC channel, or number indication information corresponding to the radio bearer. In this way, a transmission resource position at which congestion occurs can be determined based on an ID correspondence.

In some embodiments, the relay terminal device sends the first information to the network device through a first bearer, the first bearer is used by the relay terminal device to forward signaling radio bearer data or data radio bearer data for the remote terminal device, and the first bearer includes at least one of the following: an RLC bearer corresponding to the radio bearer indicated by the first information, an RLC bearer with a high priority or an RLC bearer autonomously selected based on an implementation, an RLC bearer corresponding to a signaling radio bearer for the remote terminal device, or a dedicated RLC bearer configured by the network device. In this way, the congestion information may be reported through different bearers, and there are a plurality of flexible reporting manners.

In some embodiments, the first information is generated by a sidelink relay adaptation protocol SRAP layer of the relay terminal device. In this way, the first information can be carried in an SRAP control protocol data unit (Protocol Data Unit, PDU).

In some embodiments, the first message is sent to the network device based on a second condition, where the second condition includes one or more of the following: a data packet forwarding delay meets a third threshold condition; a volume of remaining buffered data meets a fourth threshold condition; or a period of time from previous sending of a first message meets a fifth threshold condition. In this way, a quantity of times of reporting the congestion information is limited, to effectively control the signaling overheads.

In some embodiments, the relay terminal device receives, from the network device or the remote terminal device, a first indication indicating a sequence number length. In this way, the relay terminal device can read a sequence number corresponding to the data packet.

According to a second aspect of this application, a communication method applied to a network device is provided. The method includes: receiving first information from a relay terminal device, where the first information includes first congestion indication information, the first congestion indication information indicates congestion information of the relay terminal device, and the relay terminal device provides a relay service between a remote terminal device and the network device; and determining the congestion information of the relay terminal device based on the first information. In this way, congestion control related information may be directly obtained in a data transmission process.

In some embodiments, the congestion information includes one or more of the following: sequence number information of a data packet transmitted by the relay terminal device; data transmission delay information of the relay terminal device; buffer indication information of the relay terminal device, where the buffer indication information indicates buffer information of the relay terminal device; or transmission rate information of the relay terminal device. In this way, a specific data transmission status of the relay terminal device may be obtained based on content of the congestion message.

In some embodiments, a request message is sent to the relay terminal device, where the request message indicates the relay terminal device to send the first information. In this way, an occasion for reporting the congestion information may be determined, to avoid sending disorder and reduce signaling overheads.

In some embodiments, the congestion information of the relay terminal device includes congestion information corresponding to one or more of the following: a radio bearer for the remote terminal device, where the radio bearer is for data transmission between the remote terminal device and the network device; the relay terminal device; the remote terminal device; or a relay radio link control RLC channel, where the relay radio link control RLC channel is configured by the network device to carry radio bearer data for the remote terminal device between the remote terminal device and the relay terminal device or between the relay terminal device and the network device. In this way, congestion information of different granularities may be reported, to flexibly control overheads.

In some embodiments, the first information further includes one or more of the following: a first identifier ID of the remote terminal device, a first ID of the relay terminal device, a first ID of the radio bearer, a first ID of the relay RLC channel, or number indication information corresponding to the radio bearer. In this way, a transmission resource position at which congestion occurs can be determined based on an ID correspondence.

In some embodiments, the network device receives the first information from the relay terminal device through a first bearer, the first bearer is used by the relay terminal device to forward signaling radio bearer data or data radio bearer data for the remote terminal device, and the first bearer includes at least one of the following: an RLC bearer corresponding to the radio bearer indicated by the first information, an RLC bearer with a high priority or an RLC bearer autonomously selected based on an implementation, an RLC bearer corresponding to a signaling radio bearer for the remote terminal device, or a dedicated RLC bearer configured by the network device. In this way, the congestion information may be reported through different bearers, and there are a plurality of flexible reporting manners.

In some embodiments, the first information is generated by a sidelink relay adaptation protocol SRAP layer of the relay terminal device. In this way, the first information can be carried in an SRAP control protocol data unit PDU.

In some embodiments, that the network device receives the first information from the relay terminal device includes: A first network unit receives the first information from the relay terminal device. The first network unit sends second information to a second network unit, where the second information includes second congestion indication information associated with the first information, and the second congestion indication information indicates the congestion information of the relay terminal device. In this way, a central unit-distributed unit (Central Unit-Distributed Unit, CU-DU) split architecture is compatible to implement more effective and flexible congestion control.

In some embodiments, the first network unit generates the second information based on the first information. In this way, the congestion information for the remote terminal device can be communicated between a CU and a DU.

In some embodiments, the second information carries congestion information corresponding to one or more of the following: the radio bearer for the remote terminal device, where the radio bearer is for the data transmission between the remote terminal device and the network device; the relay terminal device; the remote terminal device; or the relay RLC channel, where the relay radio link control RLC channel is configured by the network device to carry the radio bearer data for the remote terminal device between the remote terminal device and the relay terminal device or between the relay terminal device and the network device. In this way, congestion information of different granularities can be reported based on the second information.

In some embodiments, the second information further includes one or more of the following: a second identifier ID of the remote terminal device, a second ID of the relay terminal device, a second ID of the radio bearer, or a second ID of the relay RLC channel. In this way, an ID correspondence can be obtained based on the second information, to determine the transmission resource position at which the congestion occurs.

In some embodiments, the second ID of the remote terminal device or the second ID of the relay terminal device is allocated by the first network unit or the second network unit to identify the remote terminal device or the relay terminal device on an interface between the first network unit and the second network unit. In this way, the congestion information can be delivered on the interface between the first network unit and the second network unit.

In some embodiments, the second identifier ID of the remote terminal device is the same as the first ID of the remote terminal device, or the second ID of the relay terminal device is the same as the first ID of the relay terminal device.

In some embodiments, the second ID of the radio bearer is the same as the first ID of the radio bearer, or the second ID of the relay RLC channel is the same as the first ID of the relay RLC channel.

According to a third aspect of this application, a communication method applied to a second network unit is provided. The method includes: receiving second information from a first network unit, where the second information includes second congestion indication information associated with first information, the first information includes first congestion indication information indicating congestion information of a relay terminal device, the second congestion indication information indicates the congestion information of the relay terminal device, and the relay terminal device provides a relay service between a remote terminal device and a network device; and determining the congestion information of the relay terminal device based on the second information. In this way, a CU-DU split architecture is compatible to implement more effective and flexible congestion control.

In some embodiments, the second information carries congestion information corresponding to one or more of the following: a radio bearer for the remote terminal device, the relay terminal device, the remote terminal device, or a relay RLC channel. In this way, congestion information of different granularities can be reported based on the second information.

In some embodiments, the second information further includes one or more of the following: a second identifier ID of the remote terminal device, a second ID of the relay terminal device, a second ID of the radio bearer, or a second ID of the relay RLC channel. In this way, an ID correspondence can be obtained based on the second information, to determine a transmission resource position at which congestion occurs.

In some embodiments, the second identifier ID of the remote terminal device is the same as a first ID of the remote terminal device, or the second ID of the relay terminal device is the same as a first ID of the relay terminal device.

In some embodiments, the second ID of the radio bearer is the same as a first ID of the radio bearer, or the second ID of the relay RLC channel is the same as a first ID of the relay RLC channel.

In some embodiments, the second ID of the remote terminal device or the second ID of the relay terminal device is allocated by the first network unit or the second network unit to identify the remote terminal device or the relay terminal device on an interface between the first network unit and the second network unit. In this way, the congestion information can be delivered on the interface between the first network unit and the second network unit.

According to a fourth aspect of this application, a communication method applied to a remote terminal device is provided. The method includes: determining third information, where the third information includes data receiving indication information, the data receiving indication information indicates data receiving information of the remote terminal device, and a relay terminal provides a relay service between the remote terminal and a network device; and sending the third information to the network device. In this manner, the network device may obtain congestion information of the relay terminal device based on the data receiving information of the remote terminal device.

In some embodiments, the data receiving information includes sequence number information of a data packet received by the remote terminal device. In this way, a specific data transmission status of the remote terminal device may be obtained based on the data receiving information.

In some embodiments, the sending the third information to the network device includes one or more of the following: sending the third information based on an indication of the relay terminal device; periodically sending the third information based on a configuration of the network device; or sending the third information in response to a request message from the network device, where the request message indicates the remote terminal device to send the third information. In this way, an occasion for reporting the congestion information may be determined, to avoid sending disorder and reduce signaling overheads.

According to a fifth aspect of this application, a communication method applied to a network device is provided. The method includes: receiving third information from a remote terminal device, where the third information includes data receiving indication information, the data receiving indication information indicates data receiving information of the remote terminal device, and a relay terminal provides a relay service between the remote terminal and the network device; and determining congestion information of the relay terminal device based on the third information and information about data transmission to the relay terminal device. In this manner, the network device may obtain the congestion information of the relay terminal device based on the data receiving information of the remote terminal device.

In some embodiments, the data receiving information includes sequence number information of a data packet received by the remote terminal device. In this way, a specific data transmission status of the remote terminal device may be obtained based on the data receiving information.

In some embodiments, a request message is sent to the remote terminal device, where the request message indicates the remote terminal device to send the third information. In this way, an occasion for reporting the congestion information may be determined, to avoid sending disorder and reduce signaling overheads.

According to a sixth aspect of this application, a communication method applied to a relay terminal device is provided. The method includes: determining fourth information, where the fourth information includes third congestion indication information, the third congestion indication information indicates congestion information of the relay terminal device, and the relay terminal device provides a relay service between a remote terminal device and a network device; and sending, by the relay terminal device, the fourth information to the remote terminal device. In this manner, the congestion information of the relay terminal device may be directly obtained in a data transmission process.

In some embodiments, the congestion information includes one or more of the following: sequence number information of a data packet transmitted by the relay terminal device; data transmission delay information of the relay terminal device; buffer indication information of the relay terminal device, where the buffer indication information indicates buffer information of the relay terminal device; or transmission rate information of the relay terminal device. In this way, a specific data transmission status of the relay terminal device may be obtained based on content of the congestion message.

In some embodiments, the sending the fourth information to the remote terminal device includes one or more of the following: periodically sending the fourth information; sending the fourth information after the relay terminal device meets a first condition, where the first condition is configured by the network device, and the first condition is applied to one or both of the following: a data transmission delay or a volume of buffered data on the relay terminal side; sending the fourth information in response to a request message from the network device, where the request message indicates the relay terminal device to send the fourth information; or sending the fourth information in response to a request message from the remote terminal device, where the request message indicates the relay terminal device to send the fourth information.

In some embodiments, the congestion information of the relay terminal device includes congestion information corresponding to one or more of the following: a radio bearer for the remote terminal device, where the radio bearer is for data transmission between the network device and the remote terminal device; the relay terminal device; the remote terminal device; or a relay radio link control RLC channel, where the relay radio link control RLC channel is configured by the network device to carry radio bearer data for the remote terminal device between the remote terminal device and the relay terminal device or between the relay terminal device and the network device. In this way, congestion information of different granularities may be reported, to flexibly control overheads.

In some embodiments, the fourth information further includes one or more of the following: a first identifier ID of the remote terminal device, a first ID of the relay terminal device, a first ID of the radio bearer, a first ID of the relay RLC channel, or number indication information corresponding to the radio bearer. In this way, a transmission resource position at which congestion occurs can be determined based on an ID correspondence.

In some embodiments, the relay terminal device sends the fourth information to the remote terminal device through a second bearer, the second bearer is used by the relay terminal device to forward signaling radio bearer data or data radio bearer data for the network device, and the second bearer includes at least one of the following: an RLC bearer corresponding to the radio bearer indicated by the fourth information, an RLC bearer with a high priority or an RLC bearer autonomously selected based on an implementation, an RLC bearer corresponding to a signaling radio bearer for the network device, or a dedicated RLC bearer configured by the network device. In this way, the congestion information may be reported through different bearers, and there are a plurality of flexible reporting manners.

In some embodiments, the fourth information is generated by a sidelink relay adaptation protocol SRAP layer of the relay terminal device. In this way, the first information can be carried in an SRAP control protocol data unit PDU.

In some embodiments, the relay terminal device receives, from the network device or the remote terminal device, a first indication indicating a sequence number length. In this way, the relay terminal device can read a sequence number corresponding to the data packet.

According to a seventh aspect of this application, a communication method applied to a remote terminal device is provided. The method includes: receiving fourth information from a relay terminal device, where the fourth information includes third congestion indication information, the third congestion indication information indicates congestion information of the relay terminal device, and the relay terminal device provides a relay service between the remote terminal device and a network device; and determining the congestion information of the relay terminal device based on the fourth information. In this manner, the congestion information of the relay terminal device may be directly obtained in a data transmission process.

In some embodiments, the congestion information includes one or more of the following: sequence number information of a data packet transmitted by the relay terminal device; data transmission delay information of the relay terminal device; buffer indication information of the relay terminal device, where the buffer indication information indicates buffer information of the relay terminal device; or transmission rate information of the relay terminal device. In this way, a specific data transmission status of the relay terminal device may be obtained based on content of the congestion message.

In some embodiments, the fourth information includes congestion information corresponding to one or more of the following: a radio bearer for the remote terminal device, where the radio bearer is for data transmission between the remote terminal device and the network device; the relay terminal device; the remote terminal device; or a relay radio link control RLC channel, where the relay radio link control RLC channel is configured by the network device to carry radio bearer data for the remote terminal device between the remote terminal device and the relay terminal device or between the relay terminal device and the network device. In this way, congestion information of different granularities may be reported, to flexibly control overheads.

In some embodiments, the fourth information further includes one or more of the following: a first identifier ID of the remote terminal device, a first ID of the relay terminal device, a first ID of the radio bearer, a first ID of the relay RLC channel, or number indication information corresponding to the radio bearer. In this way, a transmission resource position at which congestion occurs can be determined based on an ID correspondence.

In some embodiments, the remote terminal device receives the fourth information from the relay terminal device through a second bearer, the second bearer is used by the relay terminal device to forward signaling radio bearer data or data radio bearer data for the network device, and the second bearer includes at least one of the following: an RLC bearer corresponding to the radio bearer indicated by the fourth information, an RLC bearer with a high priority or an RLC bearer autonomously selected based on an implementation, an RLC bearer corresponding to a signaling radio bearer for the network device, or a dedicated RLC bearer configured by the network device. In this way, the congestion information may be reported through different bearers, and there are a plurality of flexible reporting manners.

In some embodiments, the fourth information is generated by a sidelink relay adaptation protocol SRAP layer of the relay terminal device. In this way, the first information can be carried in an SRAP control protocol data unit PDU.

In some embodiments, the remote terminal device sends buffer status indication information to the network device, where the buffer status indication information includes volume-of-buffered-data information corresponding to the radio bearer for the remote terminal device or fourth congestion indication information, where the fourth congestion indication information indicates congestion information for the radio bearer for the remote terminal device. In this way, the network device can obtain congestion information at a granularity of the radio bearer for the remote terminal device, to perform congestion control.

According to an eighth aspect of this application, a communication method applied to a network device is provided. The method includes: The network device receives buffer status indication information from a remote terminal device, where a relay terminal device provides a relay service between the remote terminal device and the network device. The network device determines congestion information of the remote terminal device based on the buffer status indication information. In this manner, the network device can obtain congestion information at a granularity of a radio bearer for the remote terminal device, to perform congestion control.

In some embodiments, the buffer status indication information includes one or both of the following: volume-of-buffered-data information corresponding to a radio bearer for the remote terminal device or fourth congestion indication information, where the fourth congestion indication information indicates congestion information for a radio bearer for the remote terminal device. In this way, the network device can locate congestion at the granularity of the radio bearer.

According to a ninth aspect of this application, a communication method applied to a network device is provided. The method includes: sending a first data packet to a remote terminal device through a relay terminal device, and sending a second data packet to the remote terminal device, where the first data packet is the same as the second data packet; receiving, from the remote terminal device, feedback indicating that the second data packet is successfully transmitted; and sending a discard indication to the relay terminal device, where the discard indication includes discard information for the first data packet. In this manner, a repeated data packet can be discarded, to reduce data transmission overheads and improve transmission efficiency.

In some embodiments, the discard indication includes one or more of the following: an identifier ID of the remote terminal device, a radio bearer ID, or sequence number information of the first transmitted data packet. In this way, a data packet on a radio bearer with the identifier of the remote terminal device may be specified to be discarded.

In some embodiments, the network device sends, to the relay terminal device, a second indication indicating a sequence number length. In this way, the data packet may be read.

In some embodiments, the discard indication further includes a number of radio bearers. In this way, the number of radio bearers may be determined, to help the relay terminal device perform discarding.

In some embodiments, sixth information is sent to the relay terminal device, where the sixth information includes a deactivation indication, the identifier ID of the remote terminal device, or the radio bearer ID. In this way, the relay terminal device can discard all buffered duplicate data packets on the bearer.

In some embodiments, the discard indication is generated by a sidelink relay adaptation protocol SRAP layer of the relay terminal device. In this way, the discard indication can be carried in an SRAP control protocol data unit PDU.

According to a tenth aspect of this application, a communication method applied to a relay terminal device is provided. The method includes: forwarding, to a remote terminal device, a first data packet received from a network device, where the first data packet is the same as a second data packet sent by the network device to the remote terminal device; receiving a discard indication from the network device, where the discard indication includes discard information for the first data packet that is the same as the successfully transmitted second data packet; and discarding the first data packet. In this manner, a repeated data packet can be discarded, to reduce data transmission overheads and improve transmission efficiency.

In some embodiments, the discard indication includes one or more of the following: an identifier ID of the remote terminal device, a radio bearer ID, or sequence number information of the first transmitted data packet. In this way, a data packet on a radio bearer with the identifier of the remote terminal device may be specified to be discarded.

In some embodiments, the relay terminal device receives, from the network device, a second indication indicating a sequence number length. In this way, the data packet may be read.

In some embodiments, the discard indication further includes a number of radio bearers. In this way, the number of radio bearers may be determined, to help the relay terminal device perform discarding.

In some embodiments, data receiving status indication information is received from the remote terminal device, where the data receiving status indication information indicates the successfully transmitted second data packet; and the to-be-discarded first data packet is determined based on the data receiving status indication information, where the first data packet is the same as the second data packet. In this way, the relay terminal device can autonomously determine, based on the data receiving status indication information, which data packet needs to be discarded. In some embodiments, the data receiving status indication information includes sequence number information of the successfully transmitted second data packet.

In some embodiments, sixth information is received from the network device, where the sixth information includes a deactivation indication, the identifier ID of the remote terminal device, or the radio bearer ID; and it is determined, based on the sixth information, to discard a duplicate data packet corresponding to the radio bearer ID. In this way, the relay terminal device can discard all buffered duplicate data packets on the bearer.

In some embodiments, the discard indication is generated by a sidelink relay adaptation protocol SRAP layer of the relay terminal device. In this way, the discard indication can be carried in an SRAP control protocol data unit PDU.

According to an eleventh aspect of this application, a communication method applied to a remote terminal device is provided. The method includes: sending a third data packet to a network device through a relay terminal device, and sending a fourth data packet to the network device, where the third data packet is the same as the fourth data packet; receiving, from the network device, feedback indicating that the fourth data packet is successfully transmitted; and sending a discard indication to the relay terminal device, where the discard indication includes discard information for the third data packet. In this manner, a repeated data packet can be discarded, to reduce data transmission overheads and improve transmission efficiency.

In some embodiments, the discard indication includes one or more of the following: an identifier ID of the remote terminal device, a radio bearer ID, sequence number information of the first transmitted data packet, or repeated-data-packet information for a radio bearer. In this way, a data packet on a radio bearer with the identifier of the remote terminal device may be specified to be discarded.

In some embodiments, the discard indication is generated by a sidelink relay adaptation protocol SRAP layer of the relay terminal device. In this way, the discard indication can be carried in an SRAP control protocol data unit PDU.

According to a twelfth aspect of this application, a communication method applied to a relay terminal device is provided. The method includes: forwarding, to a network device, a third data packet received from a remote terminal device, where the third data packet is the same as a sixth data packet sent by the remote terminal device to the network device; receiving a discard indication from the network device, where the discard indication includes discard information for the third data packet that is the same as the successfully transmitted sixth data packet; and discarding the third data packet. In this manner, the relay terminal device can discard a repeated data packet, to reduce data transmission overheads and improve transmission efficiency.

In some embodiments, the discard indication includes one or more of the following: an identifier ID of the remote terminal device, a radio bearer ID, sequence number information of the first transmitted data packet, or repeated-data-packet information for a radio bearer. In this way, a data packet on a radio bearer with the identifier of the remote terminal device may be specified to be discarded.

In some embodiments, data receiving status indication information is received from the network device, where the data receiving status indication information indicates the successfully transmitted sixth data packet; and a to-be-discarded fifth data packet is determined based on the data receiving status indication information, where the fifth data packet is the same as the sixth data packet. In this way, the relay terminal device can autonomously determine, based on the data receiving status indication information, which data packet needs to be discarded. In some embodiments, the data receiving status indication information includes sequence number information of the successfully transmitted sixth data packet.

In some embodiments, seventh information is received from the remote terminal device, where the seventh information includes a deactivation indication, the identifier ID of the remote terminal device, or the radio bearer ID; and it is determined, based on the seventh information, to discard a duplicate data packet corresponding to the radio bearer ID. In this way, the relay terminal device can discard all buffered duplicate data packets on the bearer.

According to a thirteenth aspect of this application, a communication apparatus is provided. The communication apparatus includes a processor and a memory that stores instructions. When the instructions are executed by the processor, a terminal device is enabled to perform the method according to any one of the first aspect to the twelfth aspect and the implementations of the first aspect to the twelfth aspect.

According to a fourteenth aspect of this application, a communication system is provided. The communication system includes a relay terminal device, a network device, and a second network unit, and is configured to perform the method according to any one of the first aspect to the twelfth aspect and the implementations of the first aspect to the twelfth aspect by using the relay terminal device, the network device, and the second network unit.

According to a fifteenth aspect of this application, a computer-readable storage medium is provided. The computer-readable storage medium stores instructions. When the instructions are executed by an electronic device, the electronic device is enabled to perform the method according to any one of the first aspect to the twelfth aspect and the implementations of the first aspect to the twelfth aspect.

According to a sixteenth aspect of this application, a chip is provided. The chip includes a processing circuit, configured to perform the method according to any one of the first aspect to the twelfth aspect and the implementations of the first aspect to the twelfth aspect.

According to a seventeenth aspect of this application, a computer program product is provided. The computer program product includes instructions. When the instructions are executed by an electronic device, the electronic device is enabled to perform the method according to any one of the first aspect to the twelfth aspect and the implementations of the first aspect to the twelfth aspect.

It should be understood that the content described in the summary is not intended to limit key or important features of this application or limit the scope of this application. The following descriptions facilitate understanding of other features of this application.

### BRIEF DESCRIPTION OF DRAWINGS

FIG. 1A is a diagram of a communication system in which an embodiment of this application may be implemented;
FIG. 1B is a diagram of a sidelink communication scenario related to an embodiment of this application;
FIG. 1C is a diagram of a control-plane protocol stack that is in sidelink communication and that is related to an embodiment of this application;
FIG. 1D is a diagram of a user-plane protocol stack that is in sidelink communication and that is related to an embodiment of this application;
FIG. 1E is a diagram of a U2N relay scenario related to an embodiment of this application;
FIG. 1F is a diagram of a control-plane protocol stack that is in U2N relay and that is related to an embodiment of this application;
FIG. 1G is a diagram of a user-plane protocol stack that is in L2 U2N relay and that is related to an embodiment of this application;
FIG. 1H is a diagram of a format that is of an SRAP data PDU carrying a sidelink relay adaptation protocol (Sidelink Relay Adaptation Protocol, SRAP) header and that is related to an embodiment of this application;
FIG. 1I is a diagram of a protocol stack that is in multi-path relay and that is related to an embodiment of this application;
FIG. 1J is a diagram of a protocol stack that is in multi-path relay and that is related to an embodiment of this application;
FIG. 1K is a diagram of a protocol stack that is in multi-path relay with non-3GPP connectivity and that is related to an embodiment of this application;
FIG. 1L is a diagram of a central unit (Central unit, CU)-distributed unit (Distributed Unit, DU) split protocol stack related to an embodiment of this application;
FIG. 1M is a diagram of a control-plane protocol stack that is in L2 U2N relay in a CU-DU split architecture and that is related to an embodiment of this application;
FIG. 1N is a diagram of a user-plane protocol stack that is in L2 U2N relay in a CU-DU split architecture and that is related to an embodiment of this application;
FIG. 1O is a diagram of downlink data transmission and a congestion status in multi-path relay that are related to an embodiment of this application;
FIG. 2 is a first diagram of signaling exchange in a congestion control process according to some embodiments of this application;
FIG. 3 is a second diagram of signaling exchange in a congestion control process according to some embodiments of this application;
FIG. 4 illustrates an example format of an SRAP control PDU according to some embodiments of this application;
FIG. 5 shows another example format of an SRAP control PDU according to some embodiments of this application;
FIG. 6 is a third diagram of signaling exchange in a congestion control process according to some embodiments of this application;
FIG. 7 shows an example format of a PDCP status report according to some embodiments of this application;
FIG. 8 shows an example format of a COUNT value according to some embodiments of this application;
FIG. 9 is a fourth diagram of signaling exchange in a congestion control process according to some embodiments of this application;
FIG. 10 is a fifth diagram of signaling exchange in a congestion control process according to some embodiments of this application;
FIG. 11 is a sixth diagram of signaling exchange in a congestion control process according to some embodiments of this application;
FIG. 12 shows an example format of an SRAP control PDU according to some embodiments of this application;
FIG. 13 shows another example format of an SRAP control PDU according to some embodiments of this application;
FIG. 14 shows still another example format of an SRAP control PDU according to some embodiments of this application;
FIG. 15 is a schematic flowchart of a method implemented at a relay terminal device according to an embodiment of this application;
FIG. 16 is a schematic flowchart of a method implemented at a network device according to an embodiment of this application;
FIG. 17 is a schematic flowchart of a method implemented at a second network unit device according to an embodiment of this application;
FIG. 18 is a simplified block diagram of an example device in a possible implementation according to an embodiment of this application; and
FIG. 19 is a simplified block diagram of an example device in a possible implementation according to an embodiment of this application.

Throughout all the accompanying drawings, same or similar reference numerals represent same or similar components.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In the descriptions of embodiments of this application, the term "include" and similar terms thereof should be understood as open inclusion, that is, "include but not limited to". The term "based on" should be understood as "at least partially based on". The term "an embodiment" or "this embodiment" should be understood as "at least one embodiment". The terms "first", "second", and the like may indicate different objects or a same object. Other explicit and implicit definitions may also be included below.

Embodiments of this application may be implemented according to any appropriate communication protocol, including but not limited to cellular communication protocols such as a 3rd generation (3rd Generation, 3G) communication protocol, a 4th generation (4G) communication protocol, a 5th generation (5G) communication protocol, and future communication protocols (for example, a 6th generation (6G) communication protocol), wireless local area network communication protocols such as the Institute of Electrical and Electronics Engineers (Institute of Electrical and Electronics Engineers, IEEE) 802.11, and/or any other protocols currently known or developed in future.

Technical solutions in embodiments of this application are applied to a communication system that complies with any appropriate communication protocol, for example, a general packet radio service (General Packet Radio Service, GPRS) system, a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access 2000, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation (5G) system (for example, a new radio (New Radio, NR) system), and a future communication system (for example, a 6th generation (6G) system).

For the purpose of description, the following describes embodiments of this application on the background of a 5G communication system in 3GPP. However, it should be understood that embodiments of this application are not limited to the communication system, but may be applied to any communication system having a similar problem, for example, a wireless local area network (WLAN), a wired communication system, or another communication system developed in future.

The term "terminal" or "terminal device" used in this application is any terminal device that can perform wired or wireless communication with a network device or another terminal device. The terminal device may be sometimes referred to as a user equipment or a UE. The terminal device may be any type of mobile terminal, fixed terminal, or portable terminal. The terminal device may be various wireless communication devices that have a wireless communication function. With emergence of Internet of things (Internet of Things, IOT) technologies, more devices that previously have no communication function, including but not limited to, household appliances, transportation tools, tool devices, service devices, and service facilities, start to obtain a wireless communication function by being configured with a wireless communication unit, to access a wireless communication network, and receive remote control. Such devices have the wireless communication function because the devices are configured with the wireless communication unit, and therefore also belong to the scope of wireless communication devices. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an Internet node, a communicator, a desktop computer, a laptop computer, a notebook computer, a tablet computer, a personal communication system device, a personal navigation device, a personal digital assistant (Personal Digital Assistant, PDA), a wireless data card, a wireless modem (Modulator demodulator, Modem), a positioning device, a radio broadcast receiver, an e-book device, a game device, an Internet of things (Internet of Things, IoT) device, a vehicle-mounted device, a flight vehicle, a virtual reality (Virtual Reality, VR) device, an augmented reality (Augmented Reality, AR) device, a wearable device (for example, a smartwatch), a terminal device in a 5G network or any terminal device in an evolved public land mobile network (Public Land Mobile Network, PLMN), another device that may be for communication, or any combination thereof. In the present invention, the terminal is especially a device that can perform sidelink communication, and is classified into two types: a relay UE, namely, a terminal that supports providing a relay service; and a remote UE, namely, a terminal that supports accessing a base station through the relay service.

The term "network node" or "network device" used in this application is an entity or a node that may be configured to communicate with the terminal device, for example, may be an access network device. The access network device may be an apparatus that is deployed in a radio access network and that provides a wireless communication function for a mobile terminal, for example, may be a radio access network (Radio Access Network, RAN) network device. The access network device may include various types of base stations. The base station is configured to provide a wireless access service for the terminal device. Specifically, each base station corresponds to one service coverage area. A terminal device entering the area may communicate with the base station by using a radio signal, to receive a radio access service provided by the base station. Service coverage areas of base stations may overlap, and a terminal device in an overlapping area may receive radio signals from a plurality of base stations. Therefore, the plurality of base stations may all provide services for the terminal device. Based on sizes of provided service coverage areas, the access network device may include a macro base station for providing a macro cell (Macro cell), a micro base station for providing a micro cell (Pico cell), a pico base station for providing a pico cell, and a femto base station for providing a femto cell (Femto cell). In addition, the access network device may further include various forms of relay stations, access points, remote radio units (Remote Radio Units, RRUs), radio heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) network, is referred to as a NodeB (NodeB, NB) in a 3G network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and the DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. For ease of description, in the following embodiments of this application, the foregoing apparatuses that provide the wireless communication function for the mobile terminal are collectively referred to as the network device. This is not specifically limited in embodiments of this application.

The term "radio bearer" used in this application is a general term for a series of protocol entities and configurations allocated by a base station to a UE, is a service provided by a layer 2 for communicating user data between the UE and the base station, and includes a packet data convergence protocol (Packet Data convergence Protocol, PDCP) protocol entity, a radio link control (Radio Link Control, RLC) protocol entity, a media access control (Media Access Control, MAC) protocol entity, a series of resources allocated by a physical (physical, PHY), and the like. The radio bearer is classified into a data radio bearer (Data Radio Bearer, DRB) and a signaling radio bearer (Signaling Radio Bearer, SRB). The DRB is for carrying data, and the SRB is for carrying a signaling message. In a sidelink communication scenario, UEs communicate with each other through a sidelink radio bearer (Sidelink Radio Bearer, SLRB), where the SLRB includes a sidelink data radio bearer (SL DRB) and a sidelink signaling radio bearer (SL SRB). In protocol texts, a radio bearer configuration generally includes only configurations of a PDCP layer and an SDAP layer. A protocol entity below an RLC layer is referred to as an RLC bearer, and a corresponding configuration is provided in an RLC bearer configuration.

The term "RLC bearer" used in this application is a radio link control (Radio Link Control, RLC) bearer, namely, a protocol entity and configuration below the RLC layer, is a lower-layer part of the radio bearer, and includes a series of resources such as the RLC protocol entity and a logical channel. One RLC bearer is associated with one logical channel at a MAC layer. Generally, one RLC bearer is associated with one PDCP entity, that is, one RLC serves one radio bearer RB. However, in a radio bearer multiplexing scenario, for example, an R17 L2 U2N relay scenario, one RLC bearer may be associated with a plurality of PDCP entities.

As mentioned above, a communication system in a multi-path relay architecture still has some problems that need to be resolved. Embodiments of this application provide a technical solution for reporting congestion indication information. The following further describes this application in detail with reference to the accompanying drawings. Specific operation methods, function descriptions, and the like in method embodiments may also be applied to apparatus embodiments or system embodiments.

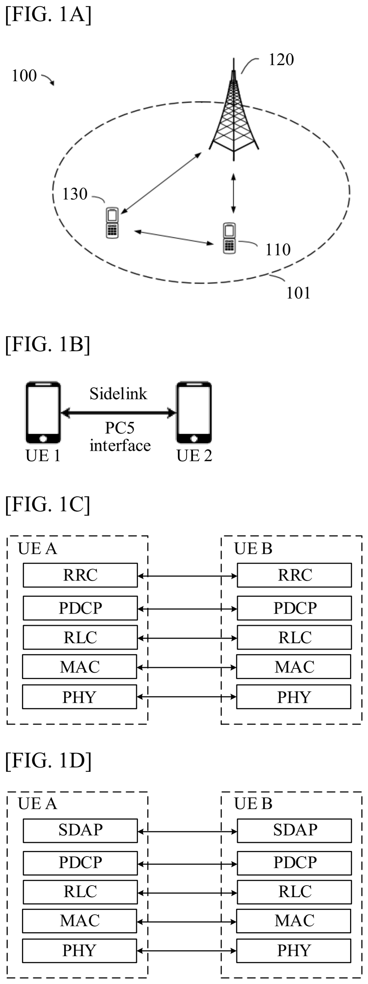

FIG. 1A is a diagram of a communication system 100 in which an embodiment of this application may be implemented. As shown in FIG. 1A, the system 100 may include a relay terminal device 110, a network device 120, and a remote terminal device 130. The remote terminal device 130 may directly communicate with the network device 120 through a link, or may indirectly communicate with the network device 120 through a link and the relay terminal device 110. A link from the remote terminal device 130 to the network device 120 is an uplink, and a link from the network device 120 to the remote terminal device 130 is referred to as a downlink.

In some deployments, the network device 120 may be split into a CU and a DU. The CU implements some functions of the network device, and the DU implements some functions of the network device. For example, the CU carries a radio resource control (Radio Resource Control, RRC) layer, a service data adaptation protocol (SDAP) layer, and a packet data convergence protocol (Packet Data convergence Protocol, PDCP) layer, and is configured to control an operation of one or more DUs. The DU carries a radio link control (Radio Link Control, RLC) layer, a media access control (Media Access Control, MAC) layer, and a physical (physical, PHY) layer. In some embodiments, the network device includes the CU and the DU. Although not shown in FIG. 1A, this is still applicable to FIG. 1A.

It should be understood that quantities of relay terminal devices, remote terminal devices, and network devices shown in FIG. 1A are merely used as examples. There may be more or fewer relay terminal devices, remote terminal devices, and network devices. This is not limited in this application.

In addition, it should be understood that the communication system 100 may be used in various scenarios. For example, application scenarios of the communication system 100 include but are not limited to existing communication systems such as a 5th generation (5G) system or a new radio (NR) communication system, a future evolved communication system, or the like. In addition, it should also be understood that the foregoing communication may comply with any appropriate communication technology and a corresponding communication standard.

FIG. 1B is a diagram of a sidelink communication scenario related to an embodiment of this application. In a wireless communication system, UEs may perform data communication through a network device, or may directly communicate with each other without relying on a network device. As shown in the figure, an interface between the UEs is referred to as a PC5 interface. A link between the UEs is referred to as a sidelink. A typical application scenario of sidelink communication is vehicle-to-everything (Vehicle-to-everything, V2X). In the vehicle-to-everything, each vehicle is one UE, and UEs may directly perform data transmission through a sidelink but not via a network. In this way, a communication delay can be effectively reduced, to improve communication efficiency. A UE in the sidelink communication may be within network coverage, and may be in any RRC state (including an RRC connected state, an RRC idle state, or an RRC inactive state); or may be outside network coverage.

FIG. 1C is a diagram of a control-plane protocol stack that is in sidelink communication and that is related to an embodiment of this application. The control-plane protocol stack sequentially includes an RRC layer, a PDCP layer, an RLC layer, a MAC layer, and a PHY layer from top to bottom. FIG. 1D is a diagram of a user-plane protocol stack that is in sidelink communication and that is related to an embodiment of this application. The user-plane protocol stack sequentially includes an SDAP layer, a PDCP layer, an RLC layer, a MAC layer, and a PHY layer from top to bottom.

In a sidelink communication process, a pair of a source layer-2 identifier (Source Layer-2 Identifier, source L2 ID) and a destination layer-2 identifier (Destination Layer-2 Identifier, destination L2 ID) identify a source UE (Source UE) and a destination UE (Destination UE) in the communication process. The source UE is a data transmitting end or a transmit UE (Tx UE), and the destination UE is a data receiving end or a receive UE (Rx UE).

A sidelink supports three communication modes: broadcast communication, unicast communication, and multicast communication. The broadcast communication is similar to broadcasting system information by a base station. To be specific, a UE sends data of a broadcast service to the outside without encrypting the data, and any other UE that is in an effective receiving range and that is interested in the broadcast service may receive the data of the broadcast service. The multicast communication is communication between all UEs in a communication group, and any UE in the group may receive and send data of a multicast service. In the unicast communication, a unicast connection needs to be first established between two UEs. After the unicast connection is established, the two UEs may communicate data based on a negotiated identifier, where the data may be encrypted or may not be encrypted. Compared with the broadcast communication, the unicast communication can be performed only between two UEs between which a unicast connection has been established.

This application mainly focuses on a unicast communication process. Each time a source UE sends a data packet, the source UE splits a 24-bit source L2 ID and a 24-bit destination L2 ID. Eight lower bits of the source L2 ID are delivered to a physical layer, and 16 higher bits are included in a sub-header of a MAC PDU. 16 lower bits of the destination L2 ID are delivered to the physical layer, and eight higher bits are included in the sub-header of the MAC PDU. The source UE (namely, a transmit UE) sends sidelink control information (sidelink control information, SCI) including the eight lower bits of the source L2 ID and the 16 lower bits of the destination L2 ID. After a receive UE receives a radio signal, a physical layer of the receive-end UE first filters data packets. To be specific, the physical layer of the receive UE may exclude, based on source L2 ID and destination L2 ID information carried in the SCI, a part of data packets that are not to be received by the receive UE or that the receive UE is not interested in, and receive, on a corresponding resource based on an indication of the SCI, a data packet that is sent to the receive UE or that the receive UE is interested in.

A UE obtains a sidelink transmission resource in two modes: a mode 1 and a mode 2. In the mode 1, a base station allocates the sidelink transmission resource based on a request of the UE. In the mode 2, the UE autonomously selects the sidelink transmission resource based on a resource pool configuration.

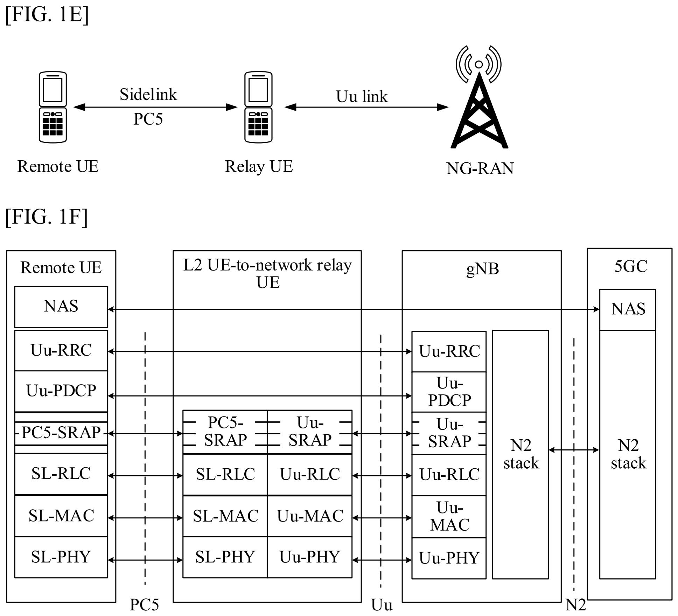

FIG. 1E is a diagram of a U2N relay scenario related to an embodiment of this application. As shown in the figure, a remote UE communicates with a base station through coordination of a relay UE. The remote UE communicates with the relay UE through a sidelink, and a corresponding interface is referred to as a PC5 interface. The relay UE is directly connected to the base station, that is, communicates with the base station through a Uu interface.

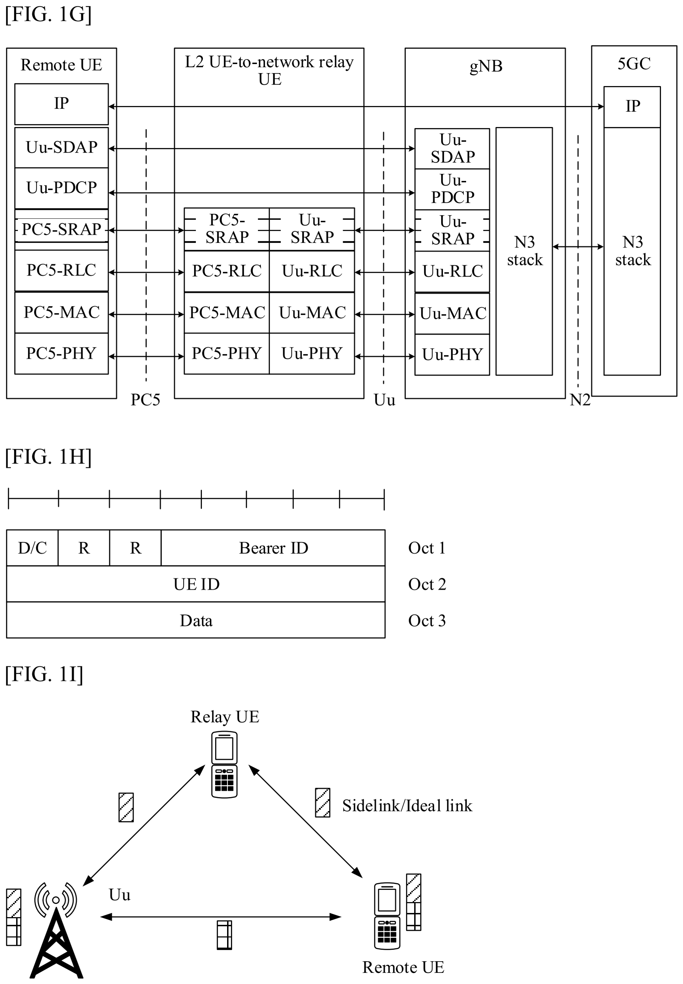

An existing U2N relay technology mainly includes two designs: a layer-2 (Layer-2, L2) design and a layer-3 (Layer-3, L3) design. In an L3 U2N relay architecture, data is relayed and forwarded at an IP layer, and a base station is not aware of a remote UE. FIG. 1F is a diagram of a possible control-plane protocol stack that is in L2 U2N relay and that is related to an embodiment of this application. FIG. 1G is a diagram of a possible user-plane protocol stack that is in L2 U2N relay and that is related to an embodiment of this application. As shown in the figures, a data packet of a remote UE is relayed and forwarded below a PDCP layer of a relay UE, that is, the relay UE maintains only a relay RLC bearer, including an RLC layer, a MAC layer, and a PHY layer. Therefore, end-to-end PDCP layers, SDAP layers, and RRC layers respectively exist in the remote UE and a base station, but end-to-end RLC layers, MAC layers, and PHY layers do not exist.

In addition, an SRAP layer is added between the RLC layer and the PDCP layer in this protocol architecture. The SRAP layer is mainly for multiplexing and demultiplexing of a radio bearer. To be specific, different radio bearers may be multiplexed onto one RLC bearer, and a corresponding demultiplexing process are supported. An RLC bearer between the remote UE and the relay UE is referred to as a PC5 relay RLC channel/bearer, and an RLC bearer between the relay UE and the base station is referred to as a Uu relay RLC channel/bearer. The base station performs SRAP configuration for the remote UE and the relay UE. The SRAP configuration may include configuration of a mapping relationship between an SRB ID/DRB ID of the remote UE and the Uu relay RLC channel/PC5 relay RLC channel, so that data of the remote UE can be correctly relayed and forwarded through the relay UE. Specifically, the base station configures a mapping relationship between a radio bearer (an SRB or a DRB) and the PC5 relay RLC channel for the remote UE, and configures a mapping relationship between a radio bearer for the remote UE and the Uu/PC5 relay RLC channel for the relay UE.

FIG. 1H is a diagram of a format that is of an SRAP data PDU carrying an SRAP header and that is related to an embodiment of this application. As shown in the figure, the diagram includes a bearer ID and a local ID. The local ID is a UE identifier that is allocated by a base station to a remote UE and that is for sending uplink data and downlink data for the remote UE. The identifier is added to a SAR header, so that a relay UE and the base station can identify a remote UE to which a data packet belongs. As shown in FIG. 1H, in a data transmission process, using an uplink direction as an example, after receiving a PDCP PDU from a PDCP layer, an SRAP layer of the remote UE adds ID information (referred to as the local ID) of the remote UE and ID information of a radio bearer (an SRB or a DRB) to the SRAP header, to generate the SRAP PDU. Therefore, after receiving a data packet from a PC5 relay RLC channel, an SRAP layer of the relay UE may deliver the data packet to a correct Uu relay RLC channel based on a mapping relationship configured by the base station. After receiving the data packet from the Uu relay RLC channel, the base station side delivers, based on the ID information of the remote UE and the ID information of the radio bearer in the SRAP header, the data packet to a corresponding PDCP layer for processing. A data transmission process in a downlink direction is similar to that in the uplink direction, and details are not described herein.

As an evolution of R17 U2N, a multi-path relay architecture is studied by 3GPP in R18. A remote UE communicates with a base station through both a direct link and an indirect link. On the direct link, the remote UE directly communicates with the base station over a Uu interface. On the indirect link, the remote UE communicates with the base station through a relay UE. The remote UE and the relay UE may be connected and communicate with each other through a sidelink, or may communicate with each other through an ideal non-3GPP link. The remote UE sends and receives same or different data through the two links, so that throughput rates and reliability of data sending and receiving can be improved.

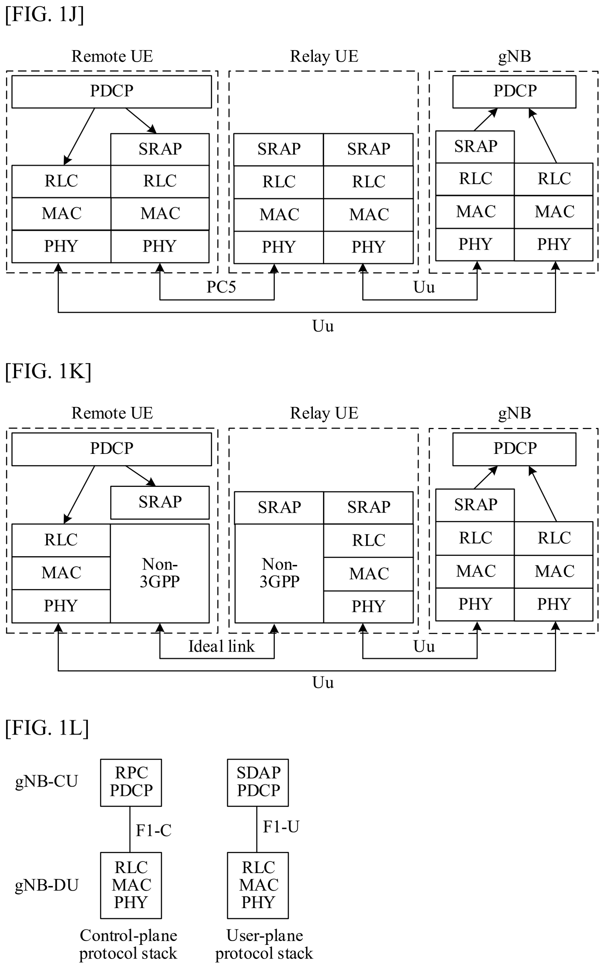

FIG. 1I is a diagram of a multi-path U2N relay communication architecture related to an embodiment of this application. As shown in the figure, a link between a remote UE and a base station is added on the basis of a protocol stack architecture in R17 L2 U2N relay. As shown in the figure, the base station may communicate with the remote UE through both a direct link and a relay UE. The remote UE may send a data packet to the relay terminal device through a sidelink or an ideal link, and the relay UE forwards the data packet to the base station. FIG. 1J is a diagram of a protocol stack that is in multi-path relay and that is related to an embodiment of this application. FIG. 1K is a diagram of a protocol stack that is in multi-path relay with non-3GPP connectivity and that is related to an embodiment of this application. An SRAP layer may or may not exist in each of a remote UE and a relay UE, and may or may not exist in each of the relay UE and a base station. Whether the SRAP layer exists is specifically determined based on a bearer multiplexing requirement of the remote UE.

A next generation radio access network (Next Generation Radio Access Network, NG-RAN) includes a series of gNBs connected to a 5G core network. In a CU-DU split architecture, a base station is divided into a CU and a DU. In other words, one gNB may be divided into one gNB-CU and one or more gNB-DUs. The gNB-CU and the gNB-DU are connected through an F1 interface. One gNB-DU can be connected to only one gNB-CU. An F1 application protocol (F1AP) is for transferring configuration information for a radio bearer between the CU and the DU, and establishing a GTP (GPRS tunneling protocol) tunnel between the DU and the CU for each radio bearer. A purpose of CU/DU splitting is: Functions, such as scheduling and fast retransmission, that have a high latency requirement may be implemented in the DU, and functions that have a low latency requirement may be implemented in the CU, even if non-ideal backhaul is performed between the CU and the DU.

FIG. 1L is a diagram of a CU-DU split protocol stack related to an embodiment of this application. In a CU-DU split architecture, a gNB-CU is responsible for RRC, SDAP, and PDCP protocol layers, and is for controlling an operation of one or more DUs. A gNB-DU is responsible for RLC, MAC, and PHY protocol layers. Further, for a control plane, a gNB-CU-CP is responsible for the RRC protocol layer and a PDCP entity corresponding to an SRB; and for a user plane, a gNB-CU-UP is responsible for the SDAP protocol layer and a PDCP entity corresponding to a DRB.

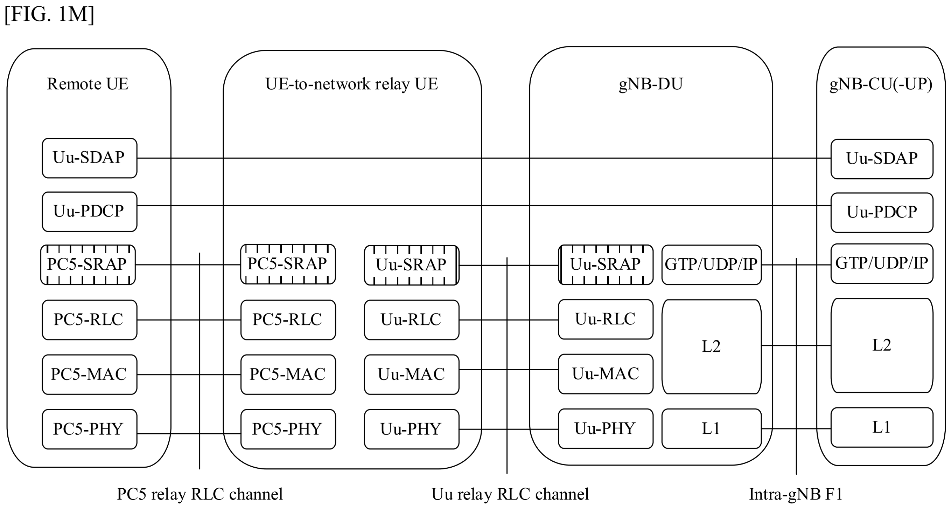

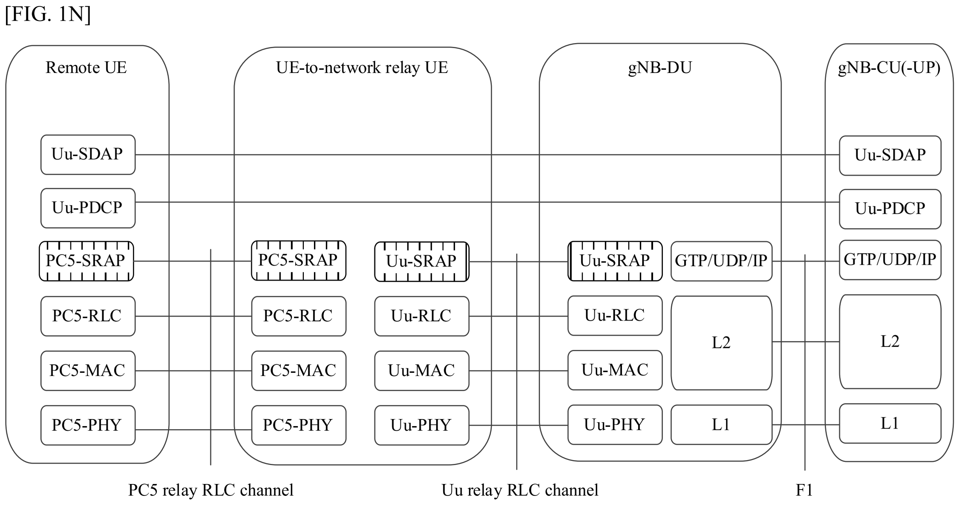

A current protocol supports data transmission in R17 SL relay in a CU-DU split architecture. FIG. 1M is a diagram of a control-plane protocol stack that is in L2 U2N relay in a CU-DU split architecture and that is related to an embodiment of this application. FIG. 1N is a diagram of a user-plane protocol stack that is in L2 U2N relay in a CU-DU split architecture and that is related to an embodiment of this application. As shown in the figures, an SRAP layer is located on a DU side. A gNB-CU determines a mapping relationship configuration of the SRAP layer, and a gNB-DU determines a configuration of a PC5 relay RLC channel/Uu relay RLC channel based on an indication of the gNB-CU. The gNB-CU allocates a local ID of a remote UE, performs SRAP layer configuration and PC5 RLC channel configuration for the remote UE by using an F1AP message for the remote UE, and performs SRAP layer configuration and PC5/Uu RLC channel configuration for a relay UE by using an F1AP message for the relay UE.

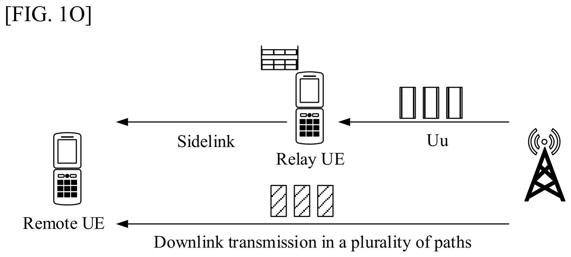

In this application, in an R18 multi-path relay scenario, congestion may occur in an uplink/downlink data transmission process, but a base station may not be aware of the congestion in a timely manner. FIG. 1O is a diagram of downlink data transmission and a congestion status in multi-path relay that are related to an embodiment of this application. In a downlink transmission process, a relay UE forwards downlink data for a remote UE. If the relay UE cannot forward, on a sidelink in a timely manner, the downlink data received from a base station, congestion may occur on the relay UE side. In an uplink transmission direction, if an application layer of the remote UE is to send data to the base station, but the remote UE does not obtain a transmission resource on a sidelink in a timely manner, congestion may occur on the remote UE side. If the relay UE does not forward the data of the remote UE on a Uu interface in a timely manner after receiving the data, congestion occurs on the relay UE side. The congestion may occur in both the uplink and downlink data transmission processes, but the base station may not be aware of the congestion in a timely manner.

To further resolve the foregoing problem, embodiments of this application provide a communication method. The method includes: determining first information, where the first information includes first congestion indication information, the first congestion indication information indicates congestion information of a relay terminal device, and the relay terminal device provides a relay service between a remote terminal device and a network device; and sending the first information to the network device.

In this manner, the relay terminal device reports the congestion indication information to the network device, to indicate a data relay and forwarding status for the remote terminal device on the relay terminal device side, so that the base station determines whether traffic control needs to be performed, to avoid congestion.

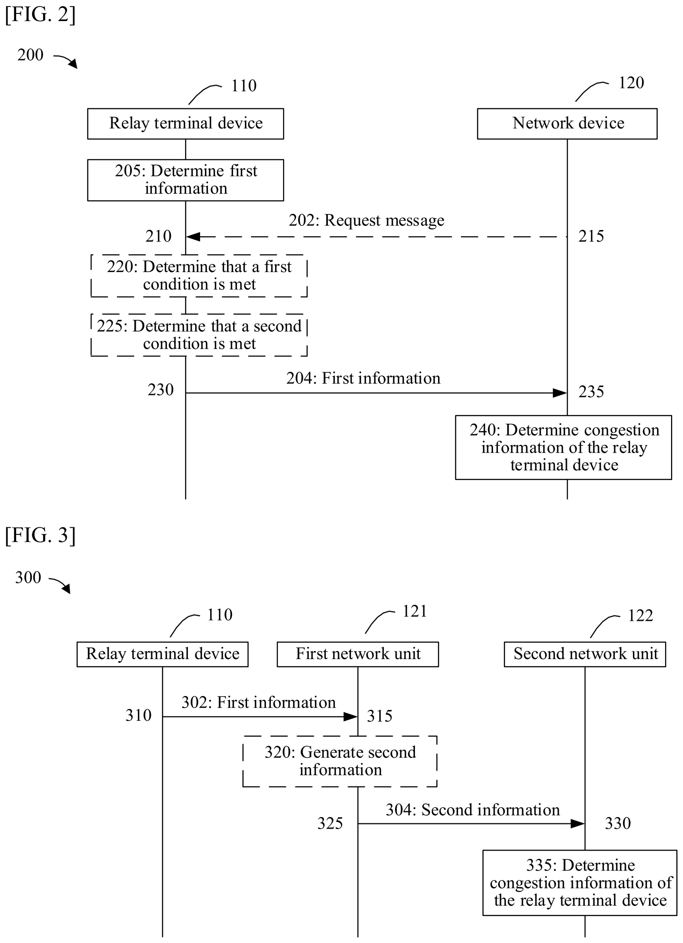

FIG. 2 is a first diagram of signaling exchange in a congestion control process 200 according to some embodiments of this application. For clarity of discussion without any limitation, the process 200 is discussed with reference to FIG. 1A.

In the process 200, the relay terminal device 110 determines first information, where the first information includes first congestion indication information. The first congestion indication information indicates congestion information of the relay terminal device 110, and the relay terminal device 110 provides a relay service between the remote terminal device 130 and the network device 120.

In some embodiments, the congestion information may include: sequence number information of a data packet transmitted by the relay terminal device 110; data transmission delay information of the relay terminal device 110; buffer indication information of the relay terminal device 110, where the buffer indication information indicates buffer information of the relay terminal device; or transmission rate information of the relay terminal device 110.

The sequence number information of the data packet transmitted by the relay terminal device 110 indicates a data forwarding status of the relay terminal device for the remote terminal device. For downlink data transmission, the relay terminal device receives data from the network device and forwards the data to the remote terminal device. The relay terminal device obtains a sequence number of a data packet, and indicates a sequence number of a forwarded data packet to the network device. For example, the sequence number information of the data packet transmitted by the relay terminal device 110 may include a maximum sequence number of data packets successfully transmitted by the relay terminal device to the remote terminal device in sequence, a maximum number of data packets transmitted by the relay terminal device to the remote terminal device, or a start sequence number and an end sequence number of data packets delivered out of sequence in data packets successfully transmitted by the relay terminal device to the remote terminal device. For example, the sequence number may be a packet data convergence protocol PDCP sequence number SN. An SRAP layer of the relay terminal device 110 forwards a downlink data packet for the remote terminal device 130. In a forwarding process, the relay terminal device 110 reads a sequence number (for example, a PDCP SN) of the data packet. After receiving the data packet, an adaptation layer of the remote terminal device 130 delivers the data packet to a PDCP layer. The relay terminal device 110 side determines, based on an RLC ACK/NACK feedback sent by the remote terminal device, whether the data packet is successfully transmitted. If no SRAP layer exists in the base station and the relay terminal device 110 or in the relay terminal device 110 and the remote terminal device 130, an RLC layer of the relay terminal device 110 delivers data to a non-3GPP link. After receiving a data packet from the non-3GPP link, the remote terminal device 130 directly delivers the data packet to the PDCP layer. If data packets are delivered out of sequence, after receiving the data packets, the PDCP layer of the remote terminal device 130 reorders the data packets. In the forwarding process, the relay terminal device 110 determines, based on read PDCP SNs of the data packets, whether the data packets are delivered out of sequence.

For example, the data transmission delay information may include a delay in forwarding a data packet by the relay terminal device 110 to the remote terminal device 130. The delay may include a buffer delay that is of a downlink data packet for the remote terminal device 130 and that is on the relay terminal device side, namely, a time interval from a moment at which the relay terminal device 110 receives, from a bottom layer, downlink data for the remote terminal device 130 that is sent by the network device 120 to a moment at which the relay terminal device 110 obtains a resource and sends the downlink data to the remote terminal device 130 on a sidelink (or a non-3GPP link). The delay may further include a delay of transmission between the remote terminal device 130 and the relay terminal device 110 or a time interval (an average value or a delay of a single piece of data) from a moment at which the relay terminal device 110 receives the data packet to a moment at which the relay terminal device 110 acknowledges that the remote terminal device 130 has successfully received the data packet. The data transmission delay information may be a delay of a specific data packet or an average value of delays of a plurality of data packets in a period of time. Optionally, a unit of the delay may be a quantity of slots.

For example, the buffer indication information of the relay terminal device 110 may include buffer information and congestion occurrence indication information of the relay terminal device 110. The buffer information may include an available buffered data volume or an occupied buffered data volume on the relay terminal device 110 side. The congestion occurrence indication information may include a buffer not available indication or a congestion indication (L2 buffer not available indication/congestion indication). For example, one-bit indication information may be for indication, where 1 indicates that congestion occurs, and 0 or a default value indicates that congestion does not occur. For example, the transmission rate information of the relay terminal device may include a data transmission rate desired by the relay terminal device.

In some embodiments, the congestion information of the relay terminal device 110 may include congestion information corresponding to the following: a radio bearer for the remote terminal device, where the radio bearer is for data transmission between the remote terminal device 130 and the network device 120; the relay terminal device 110; the remote terminal device 130; or a relay radio link control RLC channel, where the relay radio link control RLC channel is configured by the network device to carry radio bearer data for the remote terminal device 130 between the remote terminal device and the relay terminal device or between the relay terminal device and the network device. For example, the relay radio link control RLC channel may include one or more PC5 relay radio link control RLC channels or one or more Uu relay RLC channels. An RLC channel between the remote terminal device and the relay terminal device is the PC5 relay RLC channel, and an RLC channel between the relay terminal device and the network device is the Uu relay RLC channel.

As shown in FIG. 2, the relay terminal device 110 sends the first information 204 to the network device 120 in 230. Correspondingly, the network device 120 receives the first information 204 from the relay terminal device 110 in 235, and then determines the congestion information of the relay terminal device 110 in 240 based on the first information 204.

In some embodiments, the sending the first information 204 to the network device 120 in 230 may include: periodically sending the first information 204; sending the first information 204 after a first condition is met, where the first condition is configured by the network device, and the first condition is applied to one or both of the following: a data transmission delay or a volume of buffered data on the relay terminal side; or sending the first information 204 in response to a request message from the network device, where the request message 202 indicates the relay terminal device 110 to send the first information 204.

When the network device sends the request message, for example, the network device 120 may request, periodically or based on a trigger condition or an implementation of the network device 120, the relay terminal device 110 to report a congestion control message. For example, when a volume of data (a number of PDCP PDUs or a data volume in bytes) sent by the network device 120 to the relay terminal device 110 exceeds a specific threshold, or a time interval from a previous request for reporting is a periodicity value T, the network device 120 sends request information to the relay terminal device 110, to indicate the relay terminal device 110 to report the congestion control message. In request indication information of the network device 120, the network device 120 may indicate an identifier of the corresponding remote terminal device 130 or a radio bearer identifier for the corresponding remote terminal device 130, to request the relay terminal device 110 to report congestion indication information corresponding to the remote terminal device or the radio bearer.

In some embodiments, the relay terminal device 110 may send the first information 204 in 230 after determining, in 220, that the first condition is met. The first condition may be configured by the network device 120, and the first condition is applied to the following: the data transmission delay or the volume of buffered data on the relay terminal side. In other words, when the data transmission delay or the volume of buffered data on the relay terminal side meets a specific condition, the relay terminal device sends the first information in 230. For example, the network device 120 may configure a threshold thres1, a threshold thres2, and/or a threshold thres3 for the relay terminal device 110. When the delay in forwarding the data packet by the relay terminal device 110 to the remote terminal device 130 is greater than thres1, the available buffered data volume on the relay terminal device 110 side is less than thres2, or the occupied buffered data volume on the relay terminal device 110 side is greater than thres3, the relay terminal device 110 triggers the reporting of the congestion control message.

In some embodiments, the network device 120 may send the request message 202 to the relay terminal device 110 in 215, where the request message 202 indicates the relay terminal device 110 to send the first information. Correspondingly, the relay terminal device 110 sends the first information 204 in 230 in response to the request message from the network device 120. For example, the request message 202 may include a first identifier ID of the remote terminal device 130 and a first ID of the radio bearer, to indicate the relay terminal device to include congestion information for the indicated radio bearer for the remote terminal device in the first information.

In some embodiments, the first information 204 may further include the first identifier ID of the remote terminal device 130, a first ID of the relay terminal device 110, the first ID of the radio bearer, a first ID of the relay RLC channel, or number indication information corresponding to the radio bearer. For example, the first information 204 may include one or more groups of (ID of a remote terminal device, (radio bearer ID 1, congestion indication information 1)), one or more groups of (ID of a remote terminal device, (PC5 relay RLC channel ID 1, congestion indication information 1)), or one or more groups of (Uu relay RLC channel ID 1, congestion indication information 1; Uu relay RLC channel ID 2, congestion indication information 2; ...; Uu relay RLC channel ID n, congestion indication information n). For details, refer to Embodiment 1.

In some embodiments, the relay terminal device 110 may send the first information to the network device 120 through a first bearer, where the first bearer is used by the relay terminal device 110 to forward signaling radio bearer data or data radio bearer data for the remote terminal device. The first bearer includes: an RLC bearer corresponding to the radio bearer indicated by the first information, an RLC bearer with a high priority or an RLC bearer autonomously selected based on an implementation, an RLC bearer corresponding to a signaling radio bearer for the remote terminal device 130, or a dedicated RLC bearer configured by the network device. The RLC bearer with the high priority or the RLC bearer autonomously selected based on the implementation is selected from RLC bearers on the relay terminal device side that are for forwarding data of the remote terminal device. For example, the RLC bearer may include a Uu relay RLC bearer.

In some embodiments, the first information 204 may be generated by a sidelink relay adaptation protocol SRAP layer of the relay terminal device 110. For example, the first information may be carried in a sidelink relay adaptation protocol SRAP control protocol data unit PDU or a radio resource control RRC message.

In some embodiments, the relay terminal device 110 may send the first information 204 to the network device 120 in 230 after determining, in 225, that a second condition is met, where the second condition includes: A data packet forwarding delay meets a third threshold condition. A volume of remaining buffered data meets a fourth threshold condition. Alternatively, a period of time from previous sending of a first message meets a fifth threshold condition.

For example, reporting performed by the relay terminal device 110 is limited by setting a timer or a threshold. For example, a threshold for the delay or a threshold for the volume of remaining buffered data may be set. When the delay and the volume of remaining buffered data both exceed the thresholds, the relay terminal device is allowed to report the first congestion indication information corresponding to the radio bearer, the PC5/Uu relay RLC channel, the remote terminal device 130, or the relay terminal device 110. In addition, a time interval between two consecutive times of reporting the first congestion indication information by the relay terminal device 110 may be further restricted. In another example, the relay terminal device 110 may report only one piece of indication information indicating whether the congestion occurs, namely, the foregoing buffer not available indication or congestion indication, and does not need to report specific data transmission related information.

In some embodiments, the relay terminal device 110 may receive, from the network device 120 or the remote terminal device 130, a first indication indicating a sequence number length. For example, to support the relay terminal device 110 to read the sequence number carried in the data packet, sequence number length information corresponding to the radio bearer for the remote terminal device further needs to be indicated to the relay terminal device. The network device or the remote terminal device may indicate, to the relay terminal device, the sequence number length information corresponding to the bearer. For example, when the sequence number is the PDCP SN, the network device or the remote terminal device indicates, to the relay terminal device, a PDCP SN length corresponding to the radio bearer for the remote terminal device.

In this manner in this application, the relay terminal device reports congestion indication information of different granularities to the network device, so that the network device can obtain the congestion information on the relay terminal device side, to perform congestion control to improve communication performance of a system.

To understand this application more thoroughly and completely, the following describes Embodiment 1 with reference to FIG. 2. It should be noted that each part of content in Embodiment 1 may be used independently or randomly combined with content in another embodiment, and is merely used as an example but not intended to limit the protection scope of this application.

### Embodiment 1

Embodiment 1 is mainly specific to a design of a congestion control related procedure of a terminal device (including a remote terminal device and a relay terminal device) in a downlink transmission direction of R18 multi-path relay.

In the downlink transmission direction, the relay terminal device receives downlink data for the remote terminal device from a network device, and forwards the downlink data. If the relay terminal device cannot forward the downlink data in a timely manner, for example, there is no transmission resource on a sidelink, a large quantity of downlink data packets for the remote terminal device are stacked on the relay terminal device side. This causes congestion. The remote terminal device receives the downlink data for the remote terminal device from the relay terminal device or a Uu interface, and no congestion occurs.

The following describes the specific solution in Embodiment 1 in terms of reported content, a reporting occasion, a reporting mode, and the like based on different granularities of congestion indication information.

Case 1: The relay terminal device reports information at a granularity of a radio bearer for a remote terminal device.

### 1. Reported content

If the relay terminal device reports congestion indication information at the granularity of the radio bearer, reported information of the relay terminal device needs to include ID information of a remote terminal device and a radio bearer identifier, to indicate a specific radio bearer corresponding to the reported content and the specific remote terminal device using the radio bearer. The ID information of the remote terminal device may be mandatory information reported by the relay terminal device, and has a mandatory attribute. An ID of the remote terminal device may be a local ID allocated by the network device to the remote terminal device, an L2 ID of the remote terminal device, a cell radio network temporary identifier (C-RNTI) of the remote terminal device, or an index (dedicated to a remote terminal device corresponding to reporting of congestion indication information) temporarily allocated by the network device. This is not limited herein. The radio bearer identifier may be a radio bearer identity radio bearer identity used in an existing protocol.

In an example, the network device allocates a corresponding index to a remote terminal device that supports reporting of congestion indication information, and sends a correspondence between the remote terminal device and the index to the relay terminal device. The correspondence may be indicated by a correspondence between an L2 ID and an index or a correspondence between a local ID and an index.

In an example, the network device may implicitly indicate the identifier of the remote terminal device, for example, a sorting ranking of the remote terminal device in a configuration, to the remote terminal device. The network device sends, to the relay terminal device, the configuration related to the remote terminal device, and the relay terminal device may use the sorting ranking of the remote terminal device in the configuration as the identifier of the remote terminal device.

In an example, the relay terminal may implicitly indicate, to the network device, the congestion indication information corresponding to the remote terminal device. For example, the network device sends a configuration related to the remote terminal device to the relay terminal device, and the relay terminal device includes, in the congestion indication information at a same ranking, the congestion indication information related to the remote terminal device.

In correspondence to each radio bearer for the remote terminal device, a congestion control message that may be reported by the relay terminal device may include one or more pieces of congestion indication information in the following content:
- Status of sending/transmitting a data packet by the relay terminal device to the remote terminal device: For example, the status may include one or more of the following: a maximum PDCP SN of data packets successfully transmitted in sequence (max successfully delivered PDCP SN in sequence), a maximum PDCP SN of sent data packets (max transmitted PDCP SN), or PDCP SNs corresponding to data packets delivered out of sequence in successfully transmitted data packets (successfully delivered PDCP SN out of sequence (start & end)).
   1. Maximum PDCP SN of the data packets successfully transmitted in sequence (max successfully delivered PDCP SN in sequence): An SRAP layer of the relay terminal device forwards a downlink data packet for the remote terminal device. After receiving the data packet, an adaptation layer of the remote terminal device delivers the data packet to a PDCP layer. In a forwarding process, the relay terminal device reads a PDCP SN of the data packet. The relay terminal device side determines, based on an RLC ACK/NACK feedback, whether the data packet is successfully transmitted. If no SRAP layer exists in the network device and the relay terminal device or in the relay terminal device and the remote terminal device, an RLC layer of the relay terminal device delivers data to a non-3GPP link. After receiving the data packet from the non-3GPP link, the remote terminal device directly delivers the data packet to the PDCP layer. If data packets are delivered out of sequence, after receiving the data packets, the PDCP layer of the remote terminal device reorders the data packets. In the forwarding process, the relay terminal device determines, based on read PDCP SNs of the data packets, whether the data packets are delivered out of sequence.
   2. Maximum PDCP SN of the sent data packets (max transmitted PDCP SN): is a corresponding maximum PDCP SN in the data packets forwarded by the relay terminal device to the remote terminal device.
   3. PDCP SNs corresponding to the data packets delivered out of sequence in the successfully transmitted data packets (successfully delivered PDCP SN out of sequence (start & end)): may specifically indicate a start PDCP SN and an end PDCP SN of the data packets delivered out of sequence.
- Delay in forwarding a data packet by the relay terminal device to the remote terminal device: The delay may be a buffer delay that is of a downlink data packet for the remote terminal device and that is on the relay terminal device side, namely, a time interval from a moment at which the relay terminal device receives, from a bottom layer, downlink data for the remote terminal device that is sent by the network device to a moment at which the relay terminal device obtains a resource and sends the downlink data to the remote terminal device on a sidelink (or a non-3GPP link). The delay may further include a delay of transmission between the remote terminal device and the relay terminal device or a time interval (an average value or a delay of a single piece of data) from a moment at which the relay terminal device receives the data packet to a moment at which the relay terminal device acknowledges that the remote terminal device has successfully received the data packet. The delay in forwarding the data packet may be a delay of a specific data packet or an average value of delays of data packets on a specific radio bearer in a period of time. Optionally, a unit of the delay may be a quantity of slots.
- Available buffered data volume or occupied buffered data volume on the relay terminal device side (available/desired L2 buffer at the relay UE or occupied buffer size)
- Buffer not available indication or congestion indication (L2 buffer not available indication/congestion indication): For example, one-bit indication information may be for indication, where 1 indicates that congestion occurs, and 0 or a default value indicates that congestion does not occur.
- Data transmission rate desired by the relay terminal device (desired data rate for bearer)

In the example enumerated for the foregoing 1^{st} piece of information, namely, the status of sending/transmitting the data packet by the relay terminal device to the remote terminal device, the relay terminal device needs to read a PDCP SN carried in a PDCP PDU header, and therefore further needs to know a PDCP SN length for bearer data. The length is configured by the network device (where the length is a pdcp-SN-SizeDL parameter in a PDCP configuration). Optionally, the network device or the remote terminal device may indicate, to the relay terminal device, the PDCP SN length corresponding to the bearer.

### 2. Reporting occasion

There may be the following several solutions for an occasion on which the relay terminal device performs reporting:
a. The relay terminal device performs periodic reporting. Optionally, a reporting periodicity may be configured by the network device.
b. The reporting is triggered when the relay terminal device meets a trigger condition. The trigger condition may be specific to the delay in forwarding the data packet by the relay terminal device to the remote terminal device or a volume of buffered data on the relay terminal device side. For example, the network device may configure a threshold thres1, a threshold thres2, and/or a threshold thres3 for the relay terminal device. When the delay in forwarding the data packet by the relay terminal device to the remote terminal device is greater than thres1, the available buffered data volume on the relay terminal device side is less than thres2, and/or the occupied buffered data volume on the relay terminal device side is greater than thres2, the relay terminal device triggers the reporting of the congestion control message.
c. The reporting is performed based on a request of the network device: The network device may request, periodically or based on a trigger condition or an implementation of the network device, the terminal device to report the congestion control message. For example, when a volume of data (a number of PDCP PDUs or a data volume in bytes) sent by the network device to the relay terminal device exceeds a specific threshold, or a time interval from a previous request for reporting is a periodicity value T, the network device sends request information to the relay terminal device, to indicate the relay terminal device to report the congestion control message. In request indication information of the network device, the network device may indicate an identifier of a corresponding remote terminal device or a radio bearer identifier for a corresponding remote terminal device, to request the relay terminal device to report congestion indication information corresponding to the remote terminal device or a radio bearer.

### 3. Message carrying mode

The foregoing congestion indication information of the relay terminal device may be carried in an SRAP control PDU or an RRC message, for example, existing sidelink terminal device information (an SUI message), to be reported to the network device. Specifically, the relay terminal device may include, in each SRAP control PDU or RRC message in the following manners, congestion indication information for a corresponding radio bearer for a remote terminal device.

Option 1: The SRAP control PDU or the RRC message carries congestion indication information for a single radio bearer.

In a possible implementation, each congestion control message carries congestion indication information for only a single radio bearer. Therefore, the congestion control message first carries the ID information of the remote terminal device and ID information of the radio bearer, to indicate the specific radio bearer for which related information is carried. The foregoing seven pieces of enumerated congestion indication information may be optional. To be specific, the remote terminal device may perform selective reporting based on a requirement. To indicate, to the network device, which information is reported, the congestion control message may carry one piece of format indication information to indicate which information is carried in the SRAP control PDU. For example, one bitmap (bitmap) may be for indication, and a corresponding bit indicates whether corresponding congestion indication information is carried. For example, a bitmap=0000010 indicates that the congestion control message carries the corresponding buffer not available indication or congestion indication, and other congestion indication information is not carried. Alternatively, in the manner in which the network device requests the relay terminal device to perform reporting, the network device may indicate, by using a bitmap, the relay terminal device to report corresponding congestion indication information, and the relay terminal device includes the corresponding congestion indication information in the to-be-reported congestion control message based on the indication of the network device, and does not need to include a bitmap. In addition, the network device may further indicate the relay terminal device to report congestion indication information for a specific remote terminal device, or indicate the relay terminal device to report congestion indication information for a specific radio bearer for a specific remote terminal device. In this case, the congestion control message may alternatively not need to carry ID information of the remote terminal device and ID information of the bearer, and the relay terminal device reports, based on the request of the network device, the congestion indication information for the radio bearer for the corresponding remote terminal device.

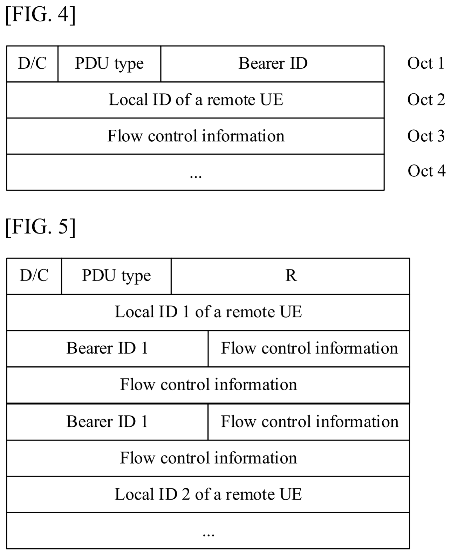

FIG. 4 shows an example format of an SRAP control PDU according to some embodiments of this application. The example format does not carry a bitmap indication. As shown in FIG. 4, D/C indicates whether a data packet is an SRAP control PDU or an SRAP data PDU, and a PDU type indicates a type of the SRAP control PDU.

Option 2: The SRAP control PDU or the RRC message carries congestion indication information for a plurality of radio bearers for a single remote terminal device.

In this manner, the congestion control message carries congestion indication information for the single remote terminal device. The congestion control message carries ID information of the remote terminal device, to indicate the corresponding remote terminal device. Then, the congestion control message carries ID information of the plurality of radio bearers and corresponding congestion indication information. Specifically, the relay terminal device may include all the foregoing congestion indication information or selectively report some information. For example, a bitmap indicates which congestion indication information above is reported. In the manner in which the network device requests the reporting, the relay terminal device reports, based on an indication of the network device, congestion indication information corresponding to one or more radio bearers for the remote terminal device. A specific manner is similar to the foregoing manner. To support a longer SRAP control PDU, the congestion control message may further carry indication information of a number of radio bearers.

Option 3: The SRAP control PDU or the RRC message may carry congestion indication information for a plurality of radio bearers for a plurality of remote terminal devices.

In this manner, the congestion control message may carry the congestion indication information for the plurality of radio bearers for the plurality of remote terminal devices. Therefore, the congestion control message carries ID information of the plurality of remote terminal devices, and carries, in correspondence to an ID of each remote terminal device, ID information of one or more radio bearers and congestion indication information for a corresponding radio bearer. Specifically, the congestion control message may carry a plurality of groups of information: (ID of a remote terminal device, (radio bearer ID 1, congestion indication information 1), (radio bearer ID 2, congestion indication information 2), ..., (radio bearer ID n, congestion indication information n)), or carry a plurality of groups of information: (ID x of a remote terminal device, radio bearer ID x, congestion indication information x). To support a longer SRAP control PDU, for the ID of each remote terminal device, indication information for a corresponding number of radio bearers may be indicated in the congestion control message, and indication information of a quantity of IDs of remote terminal devices may be further carried.

Similarly, one piece of bitmap information corresponding to each radio bearer may be carried in the congestion control message, to indicate which congestion indication information is carried. In the manner in which the network device requests the relay terminal device to perform reporting, the network device may clearly indicate which congestion indication information for a radio bearer for which remote terminal device or remote terminal devices is needed, and the relay terminal device correspondingly performs reporting. For example, the network device may indicate the relay terminal device to report an available buffered data volume that is for a first radio bearer for a first remote terminal device and that is on the relay terminal device side, a buffer not available indication or a congestion indication that is for a second radio bearer for a second remote terminal device and that is on the relay terminal device side, and a data transmission rate that is desired by the relay terminal device for a fourth radio bearer for a third remote terminal device and that is on the relay terminal device side.

FIG. 5 shows another example format of an SRAP control PDU according to some embodiments of this application. D/C indicates whether a data packet is an SRAP control PDU or an SRAP data PDU, a PDU type indicates a type of the SRAP control PDU, and R is a reserved bit. The example format further includes a plurality of local IDs of remote terminal devices and a plurality of bearer IDs corresponding to the local IDs.

To indicate that the foregoing information is specific to downlink data, the congestion control message may further carry an uplink/downlink indication. For example, the congestion control message carries one piece of Boolean indication information, where 0 represents a downlink direction, and 1 represents an uplink direction.

In addition, a PDCP control PDU of the relay terminal device or the like may alternatively be used. Details are not described herein.

In an existing R17 protocol, a radio bearer identity indicates a radio bearer identifier, including a data radio bearer DRB and a signaling radio bearer SRB. The DRB identifier ranges from a DRB 1 to a DRB 32, and the SRB identifier ranges from an SRB 0 to an SRB 3. Therefore, if the existing radio bearer identity identifies the radio bearer identifier, repeated radio bearer identifiers exist. For example, the DRB 1 and the SRB 1 cannot be distinguished based on a radio bearer identifier=1. In a possible solution, bearer type indication information is further carried in correspondence to the radio bearer identity. For example, 0 represents an SRB, and 1 represents a DRB; or 0 represents a DRB, and 1 represents an SRB. Alternatively, the SRB identifier and the DRB identifier are remapped. For example, radio bearer identifiers 0 to 2 correspond to the SRBs 1 to 3, and radio bearer identifiers 4 to 35 correspond to the DRBs 1 to 32; or radio bearer identifiers 0 to 31 correspond to the DRBs 1 to 32, and radio bearer identifiers 32 to 35 correspond to the SRBs 1 to 3. In another possible implementation, the relay terminal device reports congestion indication information for only a data radio bearer, or reports congestion indication information for only a signaling radio bearer.

### 4. Delivery of the reported message

If the congestion control message is the RRC message, the relay terminal device sends the corresponding RRC message through an SRB between the relay terminal device and the network device. For example, if the congestion indication information is carried in the SUI message, the relay terminal device sends the message to the network device through an SRB 1.

If the congestion indication information is the SRAP control PDU, the relay terminal device has the following several possible implementations:
a. If the SRAP control PDU carries congestion indication information for a single radio bearer for a single remote terminal device, the SRAP control PDU may be transmitted on the bearer, and is distinguished from a data PDU by using a D/C field. Alternatively, the relay terminal device sends the congestion indication information through a Uu relay RLC channel corresponding to the radio bearer, and the SRAP control PDU is distinguished from a data PDU by using a D/C field, and is distinguished, by using a radio bearer identifier carried in the congestion indication information, from other radio bearer data carried on the Uu relay RLC channel.
b. The relay terminal device may select a Uu relay RLC channel with a highest priority, where the Uu relay RLC channel is for carrying radio bearer data for the remote terminal device. Alternatively, the relay terminal device may select a Uu relay RLC channel corresponding to a signaling radio bearer SRB 1/SRB 2 for the remote terminal device to transmit the SRAP control PDU. Alternatively, the relay terminal device may select any one of Uu relay RLC channels with high priorities (for example, priority values are less than a specific value). These are applicable to all possible design manners of the SRAP control PDU.
c. The network device configures the SRAP control PDU to be transmitted on a specific Uu relay RLC channel. Optionally, the network device may configure a highest priority, a high priority, or a specific priority for a logical channel corresponding to the Uu relay RLC channel.
d. The relay terminal device autonomously selects, based on an implementation, one RLC bearer from a Uu relay RLC channel for carrying radio bearer data for the remote terminal device, to carry the congestion control message.

### Case 2: The relay terminal device reports information at a granularity of a remote terminal device.

### 1. Reported content

If the relay terminal device reports congestion indication information at a remote granularity, reported information of the relay terminal device needs to include identification information of a remote terminal device, to indicate the specific remote terminal device corresponding to the reported congestion indication information. The congestion indication information may include one or more of the following, and the following information is no longer specific to one radio bearer, but is specific to the indicated remote terminal device.
- Delay in forwarding a data packet by the relay terminal device to the remote terminal device: The relay terminal device forwards the data packet to the indicated remote terminal device, and collects statistics on the delay of the data packet for the remote terminal device. The delay may be a buffer delay that is of a downlink data packet for the remote terminal device and that is on the relay terminal device side, namely, a time interval from a moment at which the relay terminal device receives, from a bottom layer, downlink data for the remote terminal device that is sent by the network device to a moment at which the relay terminal device obtains a resource and sends the downlink data to the remote terminal device on a sidelink (or a non-3GPP link). The delay may further include a delay of transmission between the remote terminal device and the relay terminal device or a time interval (an average value or a delay of a single piece of data) from a moment at which the relay terminal device receives the data packet to a moment at which the relay terminal device acknowledges that the remote terminal device has successfully received the data packet. The delay in forwarding the data packet may be a delay of a specific data packet or an average value of delays of data packets on a specific radio bearer in a period of time. Optionally, a unit of the delay may be a quantity of slots.
- Available buffered data volume or occupied buffered data volume on the relay terminal device side (available/desired L2 buffer at the relay UE or occupied buffer size): For example, a volume of buffered data on the relay terminal device side may be indicated in bytes.
- Buffer not available indication or congestion indication (L2 buffer not available indication/congestion indication)
- Data transmission rate desired by the relay terminal device (desired data rate for bearer)

### 2. Reporting occasion

a. The relay terminal device performs periodic reporting, where a reporting periodicity may be configured by the network device.
b. The reporting is triggered when the relay terminal device meets a trigger condition. The trigger condition may be specific to the delay in forwarding the data packet by the relay terminal device to the remote terminal device or the volume of buffered data on the relay terminal device side. The delay of the data packet may be a delay of a single data packet or an average value of delays of downlink data for the remote terminal device. For example, the network device configures a threshold thres1, a threshold thres2, and/or a threshold thres3. When the delay in forwarding the data packet by the relay terminal device to the remote terminal device is greater than thres1, the available buffered data volume on the relay terminal device side is less than thres2, and/or the occupied buffered data volume on the relay terminal device side is greater than thres3, the relay terminal device triggers reporting of a congestion control message. The threshold configuration in this case is specific to a single remote terminal device, and is no longer specific to a single radio bearer. This is different from the solution in the case 1.
c. The reporting is performed based on a request of the network device. For example, when a volume of data (a number of PDCP PDUs or a data volume in bytes) sent by the network device to the relay terminal device exceeds a specific threshold, or a time interval from a previous request for reporting is a periodicity value T, the network device sends request information to the relay terminal device, to indicate the relay terminal device to report a congestion control message. In request indication information of the network device, the network device indicates an identifier of a corresponding remote terminal device, to indicate the relay terminal device to report congestion indication information corresponding to the indicated remote terminal device.

### 3. Message carrying mode

The congestion indication information may be carried in an SRAP control PDU or an RRC message to be reported to the network device. This is similar to the case 1. In addition, the relay terminal device may report congestion indication information for a single remote terminal device or congestion indication information for a plurality of remote terminal devices based on different granularities. The congestion indication information carries an ID of a remote terminal device to indicate a specific remote terminal device corresponding to the information. For example, a congestion control message may carry (ID 1 of a remote terminal device, congestion indication information 1; ID 2 of a remote terminal device, congestion indication information 2; ...; ID x of a remote terminal device, congestion indication information x). For a specific format design of the SRAP control PDU, refer to the design in the case 1. For example, a bitmap indicates which congestion indication information for the corresponding remote terminal device is carried in the message.

### 4. Delivery of the reported message

Refer to a corresponding solution in the case 1. The manners b to d are applicable to this case, and details are not described herein again.

### Case 3: The relay terminal device reports information at a granularity of the relay terminal device.

### 1. Reported content

If the relay terminal device reports congestion indication information at the granularity of the relay terminal device, the congestion indication information may include one or more of the following, and the following information is no longer specific to one radio bearer or one remote terminal device, but is specific to the relay terminal device that reports the congestion indication information.
- Delay in forwarding a data packet by the relay terminal device to the remote terminal device: The delay may be delays of all data packets for a remote terminal device that are forwarded by the relay terminal device, and there may be one or more remote terminal devices. The delay may be a buffer delay that is of a downlink data packet for one or more remote terminal devices connected to the relay terminal device and that is on the relay terminal device side, namely, a time interval from a moment at which the relay terminal device receives, from a bottom layer, downlink data for the remote terminal device that is sent by the network device to a moment at which the relay terminal device obtains a resource and sends the downlink data to the remote terminal device on a sidelink (or a non-3GPP link). The delay may further include a delay of transmission between the remote terminal device and the relay terminal device or a time interval (an average value or a delay of a single piece of data) from a moment at which the relay terminal device receives the data packet to a moment at which the relay terminal device acknowledges that the remote terminal device has successfully received the data packet. The delay in forwarding the data packet may be a delay of a specific data packet or an average value of delays of data packets on a specific radio bearer in a period of time. Optionally, a unit of the delay may be a quantity of slots.
- Available buffered data volume or occupied buffered data volume on the relay terminal device side (available/desired L2 buffer at the relay UE or occupied buffer size): measured in bytes.
- Buffer not available indication or congestion indication (L2 buffer not available indication/congestion indication): For example, one-bit indication information may be for indication, where 1 indicates that congestion occurs, and 0 or a default value indicates that congestion does not occur.
- Data transmission rate desired by the relay terminal device (desired data rate for bearer)

### 2. Reporting occasion

a. The relay terminal device performs periodic reporting, where a reporting periodicity may be configured by the network device.
b. The reporting is triggered when the relay terminal device meets a trigger condition. The trigger condition may be specific to the delay in forwarding the data packet by the relay terminal device to the remote terminal device or a volume of buffered data on the relay terminal device side. For example, the network device may configure a threshold thres1, a threshold thres2, and/or a threshold thres3 for the relay terminal device. When the delay in forwarding the data packet by the relay terminal device to the remote terminal device is greater than thres1, the available buffered data volume on the relay terminal device side is less than thres2, and/or the occupied buffered data volume on the relay terminal device side is greater than thres2, the relay terminal device triggers reporting of a congestion control message. The foregoing threshold configuration is specific to the current relay terminal device.
c. The reporting is performed based on a request of the network device. For example, when a volume of data (a number of PDCP PDUs or a data volume in bytes) sent by the network device to the relay terminal device exceeds a specific threshold, or a time interval from a previous request for reporting is a periodicity value T, the network device sends request information to the relay terminal device, to indicate the relay terminal device to report a congestion control message.

### 3. Message carrying mode

The congestion indication information may be carried in an SRAP control PDU or an RRC message to be reported to the network device. This is similar to the case 1. In addition, the relay terminal device reports congestion indication information related to the relay terminal device. Details are not described herein.

### 4. Delivery of the reported message

Refer to a corresponding solution in the case 1. If the reported message is the SRAP control PDU, the manners b to d are applicable to this case.

### Case 4: The relay terminal device reports information at a granularity of a PC5 relay RLC channel.

### 1. Reported content

The relay terminal device receives downlink data for a remote terminal device, and forwards the downlink data on a PC5 relay RLC channel. In a scenario with an SRAP layer, one PC5 relay RLC channel may carry a plurality of radio bearers for the remote terminal device, and a specific mapping relationship is configured by the network device. Therefore, the relay terminal device needs to collect statistics on data transmission related information at the granularity of the PC5 relay RLC channel.

If the relay terminal device reports congestion indication information at the granularity of the PC5 relay RLC channel, reported information of the relay terminal device needs to include identification information of the remote terminal device and identification information of the PC5 relay RLC channel, to indicate the specific PC5 relay RLC channel corresponding to the reported congestion indication information and the specific remote terminal device using the PC5 relay RLC channel. The congestion indication information may include one or more of the following, and the following information is specific to a specific PC5 relay RLC channel.
- Delay in forwarding a data packet by the relay terminal device to the remote terminal device
- Available buffered data volume or occupied buffered data volume on the relay terminal device side (available/desired L2 buffer at the relay UE or occupied buffer size)
- Buffer not available indication or congestion indication (L2 buffer not available indication/congestion indication)
- Data transmission rate desired by the relay terminal device (desired data rate for bearer)

### 2. Reporting occasion

a. The relay terminal device performs periodic reporting, where a reporting periodicity may be configured by the network device.
b. The reporting is triggered when the relay terminal device meets a trigger condition. The trigger condition may be specific to the delay in forwarding the data packet by the relay terminal device to the remote terminal device or a volume of buffered data on the relay terminal device side. For example, the network device may configure a threshold thres1, a threshold thres2, and/or a threshold thres3 for the relay terminal device. When the delay in forwarding the data packet by the relay terminal device to the remote terminal device is greater than thres1, the available buffered data volume on the relay terminal device side is less than thres2, and/or the occupied buffered data volume on the relay terminal device side is greater than thres2, the relay terminal device triggers reporting of a congestion control message.
c. The reporting is performed based on a request of the network device. For example, when a volume of data (a number of PDCP PDUs or a data volume in bytes) sent by the network device to the relay terminal device exceeds a specific threshold, or a time interval from a previous request for reporting is a periodicity value T, the network device sends request information to the relay terminal device, to indicate the relay terminal device to report a congestion control message. In request indication information of the network device, the network device indicates a PC5 relay RLC channel identifier for a corresponding remote terminal device.

### 3. Message carrying mode

The congestion indication information may be carried in an SRAP control PDU or an RRC message to be reported to the network device. This is similar to the foregoing. In addition, the relay terminal device may report congestion indication information for a single remote terminal device or congestion indication information for a plurality of remote terminal devices based on different granularities. The congestion indication information carries an ID of a remote terminal device and a PC5 relay RLC channel identifier to indicate a specific PC5 relay RLC channel corresponding to the information and a specific remote terminal device using the PC5 relay RLC channel. For example, the congestion control message may carry (ID of a remote terminal device, (PC5 relay RLC channel ID 1, congestion indication information 1), (PC5 relay RLC channel ID 2, congestion indication information 2), ..., (PC5 relay RLC channel ID n, congestion indication information n)), or carry a plurality of groups of information: (ID x of a remote terminal device, PC5 relay RLC channel ID x, congestion indication information x). For a specific format design of the SRAP control PDU, refer to the design in the case 1. For example, a bitmap indicates which congestion indication information for the corresponding remote terminal device is carried in the message.

### 4. Delivery of the reported message

Refer to a corresponding solution in the case 1. The manners b to d are applicable to this case.

### Case 5: The relay terminal device reports information at a granularity of a Uu relay RLC channel.

### 1. Reported content

The relay terminal device receives downlink data for a remote terminal device on a Uu relay RLC channel, and forwards the downlink data on a PC5 relay RLC channel. In a scenario with an SRAP layer, one Uu relay RLC channel may carry a plurality of radio bearers for one or more remote terminal devices. Therefore, the relay terminal device needs to collect statistics on data transmission related information at the granularity of the Uu relay RLC channel.

If the relay terminal device reports congestion indication information at the granularity of the Uu relay RLC channel, reported information of the relay terminal device needs to include identification information of the Uu relay RLC channel, to indicate the specific Uu relay RLC channel that is for the relay terminal device and that corresponds to the reported congestion indication information. The congestion indication information may include one or more of the following, and the following information is specific to a specific Uu relay RLC channel.
- Delay in forwarding a data packet by the relay terminal device to the remote terminal device
- Available buffered data volume or occupied buffered data volume on the relay terminal device side (available/desired L2 buffer at the relay UE or occupied buffer size)
- Buffer not available indication or congestion indication (L2 buffer not available indication/congestion indication)
- Data transmission rate desired by the relay terminal device (desired data rate for bearer)

### 2. Reporting occasion

a. The relay terminal device performs periodic reporting, where a reporting periodicity may be configured by the network device.
b. The reporting is triggered when the relay terminal device meets a trigger condition. For example, a threshold thres1 and a threshold thres2 are configured. When the delay in forwarding the data packet by the relay terminal device to the remote terminal device is greater than thres1, and/or the available buffered data volume on the relay terminal device side is less than thres2, the relay terminal device triggers reporting of a congestion control message. The threshold configuration in this case is specific to a single Uu relay RLC channel. This is different from the solution in the case 1.
c. The reporting is performed based on a request of the network device. For example, when a volume of data (a number of PDCP PDUs or a data volume in bytes) sent by the network device to the relay terminal device exceeds a specific threshold, or a time interval from a previous request for reporting is a periodicity value T, the network device sends request information to the relay terminal device, to indicate the relay terminal device to report a congestion control message. Optionally, in request indication information of the network device, the network device indicates a corresponding Uu relay RLC channel identifier.

### 3. Message carrying mode

The congestion indication information may be carried in an SRAP control PDU or an RRC message to be reported to the network device. This is similar to the foregoing. The relay terminal device may report congestion indication information corresponding to a single Uu relay RLC channel or a plurality of Uu relay RLC channels. The message carries identification information of the Uu relay RLC channel, to indicate the specific Uu relay RLC channel corresponding to the congestion indication information. For example, the congestion control message may carry (Uu relay RLC channel ID 1, congestion indication information 1; Uu relay RLC channel ID 2, congestion indication information 2; ...; Uu relay RLC channel ID n, congestion indication information n). Optionally, a bitmap may indicate which congestion indication information is carried in the message.

### 4. Delivery of the reported message

Refer to a corresponding solution in the case 1. The manners b to d are applicable to this case.

### Reporting overhead problem

The relay terminal device may be connected to a plurality of remote terminal devices. Therefore, if the relay terminal device frequently reports congestion indication information at the granularity of the radio bearer, and the congestion indication information carries excessive content, information reporting overheads may be high.

Therefore, a quantity of reporting times or the reported content needs to be restricted, to reduce signaling overheads. In a possible implementation, the reporting performed by the relay terminal device is limited by setting a timer or a threshold. For example, a threshold for the delay or a threshold for the available buffered data volume may be set. The relay terminal device is allowed, only when one or both of the delay and the available buffered data volume exceed the specific thresholds, to report the congestion indication information corresponding to the radio bearer, the PC5/Uu relay RLC channel, the remote terminal device, or the relay terminal device. In addition, a time interval between two consecutive times of reporting congestion indication information by the relay terminal device may be further restricted. To be specific, the relay terminal device is allowed, only when a time interval from previous reporting of congestion indication information exceeds a specific threshold, to report the congestion indication information. In another possible implementation, the relay terminal device may report only one piece of indication information indicating whether the congestion occurs, namely, the foregoing buffer not available indication or congestion indication, and does not need to report specific data transmission related information. The foregoing manner of restricting the quantity of times of reporting the congestion indication information by the relay terminal device or the reported content may be used in combination with the solution in the foregoing embodiment.

When the base station indicates the relay terminal device to perform reporting, the base station may indicate, at an appropriate moment based on an implementation, the relay terminal to perform reporting, to avoid reporting overheads.

After receiving the congestion control message of the relay terminal device, the network device may learn of a data forwarding status on the relay terminal device side, and correspondingly perform configuration optimization and data transmission optimization. For example, for a bearer on which congestion occurs on an indirect link, if the bearer is configured only on the indirect link, the bearer may be reconfigured on a direct link, or dual-link transmission, namely, PDCP split (PDCP split)/PDCP duplication (PDCP duplication), is configured for the bearer. For a radio bearer for which the PDCP split has been configured, the network device may choose to offload more data onto a direct link, to reduce downlink data delivered to the relay terminal device for relay. For a radio bearer for which the PDCP duplication has been configured, the network device may reconfigure the radio bearer as a split bearer or configure the radio bearer only on a direct link.

In addition, a resource allocation mode on a sidelink includes two modes: a mode 1 and a mode 2. When the relay terminal device operates in the mode 1, the relay terminal device reports a data buffer status of the relay terminal device, so that the network device allocates a transmission resource on the sidelink to the relay terminal device. Therefore, in this case, the network device may know data sending and receiving statuses of all relay terminal devices. When the relay terminal device operates in the mode 2, the relay terminal device autonomously selects a sidelink transmission resource. Therefore, the network device cannot know a data sending status of the relay terminal device. Therefore, the relay terminal device needs to report congestion control related information, to notify the network device of the data sending status on the relay terminal device side. Therefore, in a possible implementation, congestion control information can be reported only when a resource allocation mode of the relay terminal device is the mode 2.

In this embodiment, a set of congestion indication information indication solutions for downlink data transmission for a remote terminal device is designed for a sidelink scenario, to provide a complete solution in terms of the reported content, the reporting occasion, the message carrying mode, the message delivery mode, and the like, so that the base station can perform corresponding configuration update or traffic control based on the reported congestion indication information, to avoid or reduce congestion on the relay terminal device. The base station performs traffic control based not only on quality of service (Quality of Service, QoS) information of the remote terminal device, but may directly obtain, in a data transmission process, the congestion control related information reported by the relay terminal device. This is different from R17 SL relay.

FIG. 3 is a second diagram of signaling exchange in a congestion control process 300 according to some embodiments of this application. In some embodiments, a network unit 130 may include a first network unit and a second network unit. In a CU-DU split architecture, the first network unit may be a DU, and the second network unit may be a CU. For clarity of discussion without any limitation, the process 300 is discussed with reference to FIG. 1A and FIG. 1L. The first network unit 121 and the second network unit 122 belong to the network device 120, and are not shown in FIG. 1A. It should be understood that the first network unit 121 and the second network unit 122 are not limited to the CU-DU architecture, and the process 300 is also applicable to another scenario.

In the process 300, the relay terminal device 110 sends first information 302 to the first network unit 121 in 310. Then, the first network unit 121 sends second information 304 to the second network unit 122 in 325, where the second information 304 includes second congestion indication information associated with the first information 302, the first information includes first congestion indication information indicating congestion information of the relay terminal device, and the second congestion indication information indicates the congestion information of the relay terminal device.

In some embodiments, the first network unit 121 may generate the second information 304 in 320 based on the first information 302 after receiving the first information 302 from the relay terminal device 110 in 315. For example, in the CU-DU split architecture, an SRAP layer is placed in the DU, that is, an SRAP control PDU of the relay terminal device is processed in the DU. In addition, the DU further needs to deliver congestion indication information (where the SRAP control PDU carries congestion indication information for a single radio bearer, a single remote terminal device, or a plurality of remote terminal devices) to the CU.

In some embodiments, the second information 304 may carry congestion information corresponding to the following: a radio bearer for a remote terminal device, where the radio bearer is for data transmission between the remote terminal device and the network device 120; the relay terminal device 110; a remote terminal device; or a relay RLC channel, where the relay radio link control RLC channel is configured by the network device 120 to carry radio bearer data for the remote terminal device between the remote terminal device and the relay terminal device or between the relay terminal device and the network device.

In some embodiments, the second information 304 may further include a second identifier ID of the remote terminal device, a second ID of the relay terminal device 110, a second ID of the radio bearer, or a second ID of the RLC channel. It should be noted that identification information included in the second information may be the same as or different from identification information in the first information.

In some embodiments, the second ID of the remote terminal device or the second ID of the relay terminal device may be allocated by the first network unit 121 or the second network unit 122 to identify the remote terminal device or the relay terminal device 110 on an interface between the first network unit 121 and the second network unit 122.

As shown in FIG. 3, after receiving the second information 304 from the first network unit 121 in 330, the second network unit 122 determines the congestion information of the relay terminal device 110 based on the second information 304.

In this manner, the solution in Embodiment 1 is extended to the CU-DU architecture to split functions. This helps the network device implement congestion control more flexibly.

To understand this application more thoroughly and completely, the following describes Embodiment 2 with reference to FIG. 3. It should be noted that each part of content in Embodiment 2 may be used independently or randomly combined with content in another embodiment, and is merely used as an example but not intended to limit the protection scope of this application.

### Embodiment 2

Embodiment 2 is mainly specific to a design of a congestion control related procedure of a terminal device (including a remote terminal device and a relay terminal device) in a scenario in which a congestion control message is delivered on an F1 interface in a CU-DU architecture.

If a congestion indication information layer is carried in an RRC message and is sent by the relay terminal device to a network device, after receiving the RRC message from a bottom layer, a gNB-DU sends the RRC message to a gNB-CU by using a UL RRC MESSAGE TRANSFER message for the relay terminal device. The procedure is the same as that in a conventional technology.

If congestion indication information is carried in an SRAP control PDU, and an SRAP layer is placed in the DU, that is, the SRAP control PDU of the relay terminal device is processed in the DU, the DU needs to additionally generate second information based on first information received from the relay terminal device, to carry the congestion indication information received by the DU, and send the congestion indication information to the CU.

The congestion indication information sent by the DU to the CU may correspond to one radio bearer for one remote terminal device, a plurality of radio bearers for one remote terminal device, or a plurality of radio bearers for a plurality of remote terminal devices.

The following describes the specific solution in Embodiment 1 in terms of reported content, a message carrying mode, and the like based on different granularities of the congestion indication information.

### Case 1: The DU reports information at a granularity of a radio bearer for a remote terminal device.

### 1. Reported content

To indicate a remote terminal device and a corresponding radio bearer, the congestion indication information carries an identifier of the remote terminal device and a radio bearer identifier, to indicate the remote terminal device and the radio bearer that correspond to the congestion indication information. Optionally, an identifier of the relay terminal device may be further carried to indicate the relay terminal device corresponding to the congestion indication information. It should be understood that identification information included in the congestion indication information (the second information) sent by the DU to the CU may be the same as or different from identification information in congestion indication information (the first information) sent by the relay terminal device to the DU. This is not limited herein. In addition, identification information of the relay terminal device or the remote terminal device included in the second information may be allocated by the DU or the CU, to identify the remote terminal device or the relay terminal device on an interface between the DU and the CU.

In correspondence to the indicated remote terminal device or radio bearer for the remote terminal device, the congestion indication information may include buffer indication information of the relay terminal device, where the buffer indication information indicates buffer information of the relay terminal device or transmission rate information and congestion indication information of the relay terminal device.

### 2. Message carrying mode

The DU may specifically deliver the congestion indication information (congestion indication information that is carried in the SRAP control PDU and that corresponds to a single radio bearer, a plurality of radio bearers for a single remote terminal device, or radio bearers for a plurality of remote terminal devices) to the CU in the following several implementations.
a. The DU includes the congestion indication information in an F1AP message (for example, a terminal device context management message) for a remote terminal device, to deliver the congestion indication information to the CU. In an example, the F1AP message for the remote terminal device carries congestion indication information for the corresponding remote terminal device or congestion indication information corresponding to one or more radio bearers for the corresponding remote terminal device, and an F1AP ID of the remote terminal device carried in the F1AP message identifies the remote terminal device and indicates the remote terminal device corresponding to the congestion indication information.
b. The DU includes the congestion indication information in an F1AP message (for example, a terminal device context management message) for the relay terminal device, to deliver the congestion indication information to the CU. In an example, the F1AP message for the relay terminal device carries congestion indication information on the corresponding relay terminal device side, and may include congestion indication information corresponding to one or more remote terminal devices served by the relay terminal. Specifically, the F1AP message may include congestion indication information corresponding to one or more radio bearers for one remote terminal or congestion indication information corresponding to a plurality of radio bearers for a plurality of remote terminals. The F1AP message carries an F1AP ID of the relay terminal device, to identify the relay terminal device corresponding to the congestion indication information.
c. The DU generates an F1-U data PDU, and includes congestion indication information for a single radio bearer, a single remote terminal device, or a plurality of remote terminal devices in the F1-U data PDU, to send the congestion indication information to the CU. The DU may send the F1-U data PDU through an existing F1-U tunnel for the remote terminal device.
d. The DU generates non-terminal device associated F1AP signaling, where the signaling carries congestion indication information received from the relay terminal device.

In the manners a and b, the carried information may be congestion indication information corresponding to one or more radio bearers for one remote terminal.

### Case 2: The DU reports information at a granularity of a remote terminal device.

To indicate a remote terminal device, the congestion indication information carries an identifier of the remote terminal device, to indicate the remote terminal device corresponding to the congestion indication information. Optionally, an identifier of the relay terminal device may be further carried to indicate the relay terminal device corresponding to the congestion indication information. It should be understood that identification information included in the congestion indication information (the second information) sent by the DU to the CU may be the same as or different from identification information in congestion indication information (the first information) sent by the relay terminal device to the DU. This is not limited herein. In addition, identification information of the relay terminal device or the remote terminal device included in the second information may be allocated by the DU or the CU, to identify the remote terminal device or the relay terminal device on an interface between the DU and the CU.

In correspondence to the indicated remote terminal device, the congestion indication information may include buffer indication information of the relay terminal device, where the buffer indication information indicates buffer information of the relay terminal device or transmission rate information and congestion indication information of the relay terminal device. For details, refer to content in the first information, and the details are not described herein again.

For a specific message carrying mode, refer to the solutions a to d in the case 1.

### Case 3: The DU reports information at a granularity of the relay terminal device.

To indicate the relay terminal device, the congestion indication information carries an identifier of the relay terminal device, to indicate the relay terminal device corresponding to the congestion indication information. In addition, identification information of the relay terminal device included in the second information may be allocated by the DU or the CU, to identify the relay terminal device on an interface between the DU and the CU.

In correspondence to the indicated relay terminal device, the congestion indication information may include buffer indication information of the relay terminal device, where the buffer indication information indicates buffer information of the relay terminal device or transmission rate information and congestion indication information of the relay terminal device. For details, refer to content in the first information, and the details are not described herein again.

For a specific message carrying mode, refer to the solutions a to d in the case 1. The manners b and c are applicable to this case. In the manner a, the DU may include the congestion indication information in an F1AP message (for example, a terminal device context management message) for the relay terminal device, to deliver the congestion indication information to the CU.

### Case 4: The DU reports information at a granularity of a PC5 relay RLC channel.

Refer to a corresponding solution in the case 1. An only difference is that identification information of a PC5 relay RLC channel needs to be carried in a message, to indicate the PC5 relay RLC channel corresponding to the congestion indication information.

### Case 5: The DU reports information at a granularity of a Uu relay RLC channel.

Refer to a corresponding solution in the case 1. An only difference is that identification information of a Uu relay RLC channel needs to be carried in a message, to indicate the Uu relay RLC channel corresponding to the congestion indication information.

In this embodiment, a set of congestion indication information indication solutions for downlink data transmission for a remote terminal device is designed for the delivery of the congestion control message on the F1 interface in the CU-DU architecture, to provide a complete solution in terms of the reported content, the message carrying mode, the message delivery mode, and the like, so that the solution in Embodiment 1 is extended to the CU-DU architecture to split functions. This helps the network device implement congestion control more flexibly.

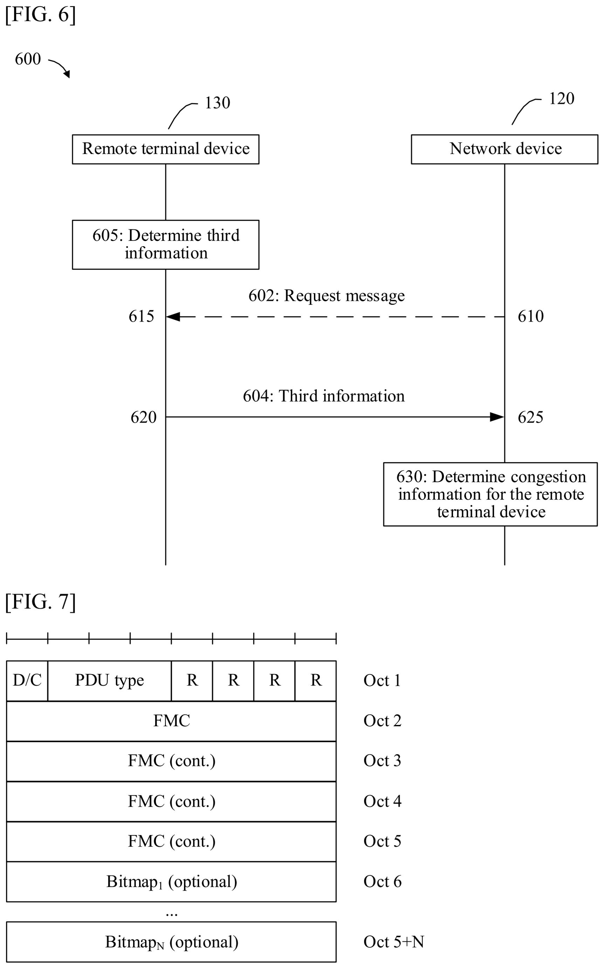

FIG. 6 is a third diagram of signaling exchange in a congestion control process according to some embodiments of this application. For clarity of discussion without any limitation, the process 600 is discussed with reference to FIG. 1A.

In the process 600, the remote terminal device 130 determines third information 604 in 605, where the third information 604 includes data receiving indication information, the data receiving indication information indicates data receiving information of the remote terminal device, and the relay terminal device provides a relay service between the remote terminal and the network device.

In some embodiments, the network device 120 may send a request message 602 to the remote terminal device 130 in 610, where the request message 602 indicates the remote terminal device 120 to send the third information 604 in 620.

In some embodiments, the data receiving information may include sequence number information of a data packet received by the remote terminal device 130.

In some embodiments, the sending the third information 604 to the network device 120 may include: sending the third information 604 based on an indication of the relay terminal device; periodically sending the third information 604 based on a configuration of the network device 120; or sending the third information 604 in response to the request message from the network device 120, where the request message indicates the remote terminal device 130 to send the third information 604.

As shown in FIG. 6, the remote terminal device 130 sends the third information 604 to the network device 120 in 620. Correspondingly, after receiving the third information 604 from the remote terminal device 130 in 625, the network device 120 determines congestion information for the remote terminal device 130 in 630 based on the third information 604.

In this manner, the remote terminal device is triggered, by using the indication of the relay terminal device or the request of the network device or through periodicity configuration by the network device, to report a downlink data receiving status on a sidelink, so that the network device can determine a data buffer status on the relay terminal device side based on a downlink data sending status and the data receiving status of the remote terminal device on the sidelink, and perform congestion control.

To understand this application more thoroughly and completely, the following describes Embodiment 3 with reference to FIG. 6. It should be noted that each part of content in Embodiment 3 may be used independently or randomly combined with content in another embodiment, and is merely used as an example but not intended to limit the protection scope of this application.

### Embodiment 3

Different from Embodiment 1, an alternative solution in which a relay terminal device directly reports congestion indication information is further provided in this application. A main idea of this solution is that a network device learns of, based on a status of sending data to the relay terminal device and a status of receiving data from the relay terminal device on a remote terminal device side, a data forwarding status on the relay terminal device side, and determines whether congestion occurs.

First, the network device may know the status of sending data by the network device to the relay terminal device. If the network device can know the data receiving status of the remote terminal device, the network device may determine a data buffer status of the relay terminal device. According to this idea, in a process in which the remote terminal device receives downlink data, the remote terminal device may report data receiving related information to the network device. In a possible implementation, an existing PDCP status report may be reused for the reported information. FIG. 7 shows an example format of a PDCP status report according to some embodiments of this application.

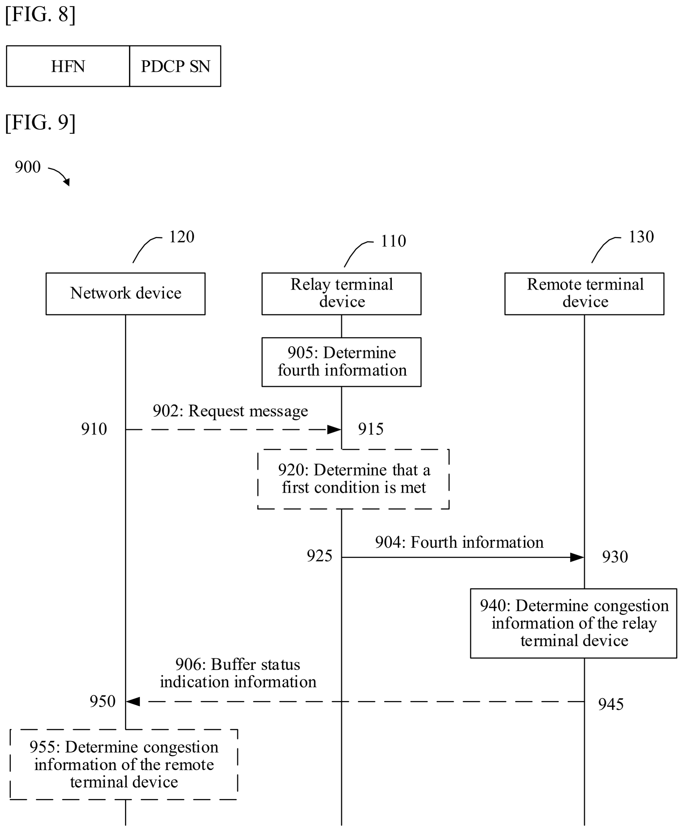

As shown in FIG. 7, FMC (First Missing COUNT) is a COUNT value of a 1^{st} missing PDCP SDU in a PDCP reordering window, and occupies 32 bits in total. The COUNT value includes two parts: a hyper frame number (Hyper Frame Number, HFN) and a PDCP SN. FIG. 8 shows an example format of a COUNT value according to some embodiments of this application.

A bitmap indicates a data packet missing and receiving status starting from the PDCP SDU whose COUNT value is FMC. If a corresponding bit in the bitmap is 0, it indicates that a corresponding PDCP SDU is missing. If a corresponding bit in the bitmap is 1, it indicates that a corresponding PDCP SDU is successfully received. For example, if FMC=30 and the bitmap is 10010, it indicates that data packets whose COUNT values are 32, 33, and 35 are missing, and data packets whose COUNT values are 31 and 34 are successfully received. After receiving the PDCP status report of the remote terminal device, the network device may learn of the data receiving status on the remote terminal device side, and determine the data buffer status on the relay terminal device side based on the data receiving status.

The information reported by the remote terminal device may further include:
- maximum SN of PDCP PDUs received in sequence; and
- start PDCP SN and end PDCP SN in PDCP PDUs received out of sequence and number of PDCP SNs delivered out of sequence, or maximum PDCP SN and minimum PDCP SN in PDCP PDUs delivered out of sequence and number of PDCP SNs delivered out of sequence.

Optionally, the foregoing PDCP SN may alternatively be FMC, and indicates a sequence number of a data packet. A specific form is not limited herein.

The remote terminal device may trigger the reporting of the data receiving related information or the PDCP status report in the following several manners:
1. The remote terminal device triggers the reporting of the foregoing message based on an indication of the relay terminal device. In an example, when a volume of buffered data that is at the relay terminal device and that is for downlink data on a radio bearer for a specific remote terminal device exceeds a specific threshold, or a waiting period of time for buffered data exceeds a specific threshold, the relay terminal device sends indication information to the remote terminal device through a sidelink, to trigger the remote terminal device to report the data receiving related information or the PDCP status report. The threshold may be configured by the base station. The indication information of the relay terminal device may be an SRAP control PDU, a sidelink RRC message, or the like. This is not limited herein.
2. Alternatively, the remote terminal device may perform periodic reporting based on a configuration of the network device. The network device may configure a reporting periodicity for the remote terminal device, or separately configure one periodicity for each radio bearer for the remote terminal device, to indicate the remote terminal device to perform periodic reporting.
3. The remote terminal device performs reporting based on a request of the network device.

As analyzed in Embodiment 1, the network device is not aware of the data forwarding status of the relay terminal device only when a resource selection mode of the relay terminal device is a mode 2. Therefore, this solution may be specific only to the relay terminal device operating in the mode 2. Therefore, the network device may notify, by using explicit indication information, the remote terminal device whether the remote terminal device needs to report the data receiving related information.

Optionally, in the reporting trigger manner 1, the relay terminal device sends the indication information to the remote terminal device only when the relay terminal device operates in the mode 2. In the manner 2 and the manner 3, the network device may configure the periodicity for or send the request to the remote terminal device only when the relay terminal device operates in the mode 2.

In this embodiment, the remote terminal device is triggered, by using the indication of the relay terminal device or the request of the network device or through periodicity configuration by the network device, to report the downlink data receiving status on the sidelink, so that the network device can determine the data buffer status on the relay terminal device side based on the downlink data sending status and the data receiving status of the remote terminal device on the sidelink, and perform congestion control.

FIG. 9 is a fourth diagram of signaling exchange in a congestion control process according to some embodiments of this application. For clarity of discussion without any limitation, the process 900 is discussed with reference to FIG. 1A.

In the process 900, the relay terminal device 110 determines fourth information 904 in 905, where the fourth information 904 includes third congestion indication information, the third congestion indication information indicates congestion information of the relay terminal device, and the relay terminal device 110 provides a relay service between the remote terminal device 130 and the network device 120.

In some embodiments, the congestion information may include: sequence number information of a data packet transmitted by the relay terminal device 110; data transmission delay information of the relay terminal device; buffer indication information of the relay terminal device, where the buffer indication information indicates buffer information of the relay terminal device; or transmission rate information of the relay terminal device.

In some embodiments, the congestion information of the relay terminal device may include congestion information corresponding to the following: a radio bearer for the remote terminal device, where the radio bearer is for data transmission between the network device and the remote terminal device; the relay terminal device; the remote terminal device; or a relay radio link control RLC channel, where the relay radio link control RLC channel is configured by the network device to carry radio bearer data for the remote terminal device between the remote terminal device and the relay terminal device or between the relay terminal device and the network device.

In some embodiments, the fourth information further includes: a first identifier ID of the remote terminal device, a first ID of the relay terminal device, a first ID of the radio bearer, a first ID of the relay RLC channel, or number indication information corresponding to the radio bearer.

As shown in FIG. 9, the relay terminal device 110 sends the fourth information 904 to the remote terminal device 130 in 925. Correspondingly, after receiving the fourth information 904 from the relay terminal device 110 in 930, the remote terminal device 130 determines the congestion information of the relay terminal device 110 based on the fourth information 904.

In some embodiments, the sending the fourth information to the remote terminal device includes: periodically sending the fourth information; sending the fourth information after the relay terminal device meets a first condition, where the first condition is configured by the network device, and the first condition is applied to a data transmission delay or a volume of buffered data on the relay terminal side; or sending the fourth information in response to a request message from the network device, where the request message indicates the relay terminal device to send the fourth information.

In some embodiments, the relay terminal device sends the fourth information to the remote terminal device through a second bearer, the second bearer is used by the relay terminal device to forward signaling radio bearer data or data radio bearer data for the remote terminal device, and the second bearer includes: an RLC bearer corresponding to the radio bearer indicated by the fourth information, an RLC bearer with a high priority or an RLC bearer autonomously selected based on an implementation, an RLC bearer corresponding to a signaling radio bearer for the remote terminal device, or a dedicated RLC bearer configured by the network device.

In some embodiments, the fourth information is generated by a sidelink relay adaptation protocol SRAP layer of the relay terminal device.

In some embodiments, the relay terminal device receives, from the network device or the remote terminal device, a first indication indicating a sequence number length.

In some embodiments, the remote terminal device receives the fourth information from the relay terminal device by using radio resource control RRC.

In some embodiments, the remote terminal device 130 sends buffer status indication information 906 to the network device 120 in 945, where the buffer status indication information 906 includes volume-of-buffered-data information corresponding to the radio bearer for the remote terminal device or fourth congestion indication information, where the fourth congestion indication information indicates congestion information for the radio bearer for the remote terminal device. Correspondingly, after receiving the buffer status indication information 906 from the remote terminal device 130 in 950, the network device 120 determines the congestion information of the remote terminal device 130 based on the buffer status indication information 906.

In this manner, the solution in which the relay terminal device side sends congestion indication information of different granularities to the remote terminal device enables the remote terminal device to perform traffic control, to avoid congestion in data transmission.

To understand this application more thoroughly and completely, the following describes Embodiment 4 with reference to FIG. 9. It should be noted that each part of content in Embodiment 4 may be used independently or randomly combined with content in another embodiment, and is merely used as an example but not intended to limit the protection scope of this application.

### Embodiment 4

In this embodiment, a congestion control indication solution is mainly discussed for uplink data transmission of a remote terminal device.

In an uplink data transmission process, a relay terminal device receives data from the remote terminal device. However, relayed data may be congested on the relay terminal device side because a Uu transmission resource cannot be obtained in a timely manner. In a conventional technology, a relay terminal device requests, by reporting a buffer status report (Buffer Status Report, BSR), a network device to allocate a resource, where the BSR includes a volume of buffered data for one or more logical channel groups, one logical channel group includes a plurality of logical channels, and one logical channel corresponds to one Uu relay RLC channel or one RLC bearer. To enable the network device to better know a data buffer status on the relay terminal device side, the relay terminal device may choose to report volume-of-buffered-data information at a granularity of a radio bearer for a remote terminal device or a granularity of a Uu relay RLC channel.

In addition, the relay terminal device may further send congestion indication information to the remote terminal device through a sidelink. The relay terminal device may indicate congestion indication information of different granularities such as a granularity of a radio bearer, a granularity of a PC5 relay RLC channel, and a granularity of a remote terminal device to the remote terminal device. This is similar to downlink data transmission for the remote terminal device. The following describes, in terms of indicated content, an indication occasion, an indication information carrying mode, and an indication message delivery mode, a solution in which the relay terminal device sends the congestion indication information to the remote terminal device.

### Case 1: The relay terminal device indicates congestion indication information at the granularity of the radio bearer.

### 1. Indicated content

The indication information sent by the relay terminal device to the remote terminal device may include one or more of the following:
- Status of sending/transmitting a data packet by the relay terminal device to the remote terminal device: For example, the status may include one or more of the following: a maximum sequence number of data packets successfully transmitted in sequence, a maximum sequence number of sent data packets, or sequence numbers corresponding to data packets delivered out of sequence in successfully transmitted data packets. The sequence number may be a PDCP SN or FMC. This is not limited herein. The following uses an example in which the sequence number is the PDCP SN for description: 1. Maximum PDCP SN of the data packets successfully transmitted in sequence (max successfully delivered PDCP SN in sequence): The relay terminal device forwards uplink data of the remote terminal device, to deliver the uplink data to the network device. In a forwarding process, the relay terminal device reads a PDCP SN of a data packet. The relay terminal device determines, based on an RLC ACK/NACK feedback of the network device, whether the data packet is successfully transmitted. The relay terminal device may further determine, based on read PDCP SNs of data packets, whether the data packets are delivered out of sequence.

2. Maximum PDCP SN of the sent data packets (max transmitted PDCP SN): is a corresponding maximum PDCP SN in the data packets forwarded by the relay terminal device for the remote terminal device.

3. PDCP SNs corresponding to the data packets delivered out of sequence in the successfully transmitted data packets (successfully delivered PDCP SN out of sequence (start & end)): may specifically indicate a start PDCP SN and an end PDCP SN of the data packets delivered out of sequence.
- Delay in forwarding a data packet by the relay terminal device: The delay may be a buffer delay that is of an uplink data packet of the remote terminal device and that is on the relay terminal device side, namely, a time interval from a moment at which the relay terminal device receives uplink data of the remote terminal device on a sidelink to a moment at which the relay terminal device obtains a resource on a Uu interface and sends the uplink data. The time interval may be specific to a specific data packet on a specific radio bearer or an average value of delays of all data packets transmitted on the radio bearer in a period of time. The delay may further include a transmission delay of the relay terminal device on the Uu interface or a time interval (an average value or a delay of a single piece of data) from a moment at which the relay terminal device receives the data packet to a moment at which the relay terminal device acknowledges that the data packet has been successfully sent to the network device.
- Available buffered data volume or occupied buffered data volume on the relay terminal device side (available/desired L2 buffer at the relay UE or occupied buffer size)
- Buffer not available indication or congestion indication (L2 buffer not available indication/congestion indication): For example, one-bit indication information may be for indication, where 1 indicates that congestion occurs, and 0 or a default value indicates that congestion does not occur.
- Data transmission rate desired by the relay terminal device (desired data rate for bearer)

Similarly, to support the relay terminal device to read a PDCP SN carried in a PDCP PDU header, a PDCP SN length corresponding to the radio bearer for the remote terminal device further needs to be indicated to the relay terminal device. The network device or the remote terminal device may indicate, to the relay terminal device, the PDCP SN length corresponding to the bearer.

### 2. Indication occasion

Similarly, manners of triggering the relay terminal device to send the indication information to the remote terminal device may be as follows:
a. The relay terminal device performs periodic indication. Optionally, an indication periodicity may be configured by the network device.
b. Sending of a congestion control message is triggered when the relay terminal device meets a trigger condition. The trigger condition may be specific to the delay in forwarding the data packet by the relay terminal device for the remote terminal device or a volume of buffered data on the relay terminal device side. For example, the network device may configure a threshold thres1 and/or a threshold thres2 for the relay terminal device. When the delay in forwarding the uplink data packet by the relay terminal device for the remote terminal device is greater than thres1, and/or the available buffered data volume on the relay terminal device side is less than thres2, the relay terminal device triggers reporting of the congestion control message.
c. The congestion indication information is sent to the remote terminal device based on an indication of the network device. In indication information of the network device, the network device may indicate an identifier of the corresponding remote terminal device or a radio bearer identifier for the corresponding remote terminal device, to request the relay terminal device to send, to the remote terminal device, congestion indication information for a corresponding radio bearer.

### 3. Indication information carrying mode

The relay terminal device may include the congestion indication information in an SRAP control PDU or a sidelink RRC message, to send the congestion indication information to the remote terminal device. Specifically, each congestion control message may carry congestion indication information for only a single radio bearer, or may carry congestion indication information for a plurality of radio bearers.

Option 1: The SRAP control PDU or the sidelink RRC message carries congestion indication information for a single radio bearer.

In this case, the congestion control message carries identification information of a radio bearer, to indicate the specific radio bearer corresponding to the carried message. For a mode of carrying the foregoing congestion indication information, refer to the mode in Embodiment 1, and details are not described herein again.

Option 2: The SRAP control PDU or the sidelink RRC message carries congestion indication information for a plurality of radio bearers.

Specifically, the congestion control message may carry a plurality of groups of (radio bearer ID 1, congestion indication information 1, radio bearer ID 2, congestion indication information 2, ..., radio bearer ID n, congestion indication information n). To support a longer SRAP control PDU, the congestion control message may further carry radio bearer number indication information, to indicate a number of radio bearers for which congestion indication information is carried in the message.

A problem of overlapping between an SRB and a DRB is described in Embodiment 1.

### 4. Indication message delivery

If the congestion indication information is carried in the sidelink RRC message, the relay terminal device sends the message to the remote terminal device through a sidelink SRB.

If the congestion indication information is carried in the SRAP control PDU:
a. If the SRAP control PDU carries congestion indication information for a single radio bearer, the SRAP control PDU may be transmitted on the radio bearer, and is distinguished from a data PDU by using a D/C field. On the sidelink, the relay terminal device performs delivery based on a mapping relationship configured by the network device and through a PC5 relay RLC channel corresponding to the radio bearer.
b. The relay terminal device may select a PC5 relay RLC channel with a highest priority, transmit the SRAP control PDU on a PC5 relay RLC channel corresponding to an SRB 1/SRB 2, or select any one of PC5 relay RLC channels with high priorities (for example, priority values are less than a specific value). These are applicable to all possible design manners of the SRAP control PDU.
c. The network device configures the SRAP control PDU to be transmitted on a specific PC5 relay RLC channel. Optionally, the network device may configure a highest priority, a high priority, or a specific priority for a logical channel corresponding to the PC5 relay RLC channel.
d. The relay terminal device autonomously selects a PC5 relay RLC channel based on an implementation, where the PC5 relay RLC channel is for sending the congestion control message.

### Case 2: The relay terminal device indicates information at the granularity of the remote terminal device.

### 1. Indicated content

If the relay terminal device indicates congestion indication information at the granularity of the remote terminal device, the congestion indication information may include one or more of the following, and the following information is no longer specific to one radio bearer, but is specific to the remote terminal device.
- Delay in forwarding a data packet by the relay terminal device: The relay terminal device forwards the data packet to the indicated remote terminal device, and collects statistics on the delay of the data packet of the remote terminal device. The delay may be a buffer delay that is of a downlink data packet of the remote terminal device and that is on the relay terminal device side, namely, a time interval from a moment at which the relay terminal device receives, from a bottom layer, downlink data for the remote terminal device that is sent by the network device to a moment at which the relay terminal device obtains a resource and sends the downlink data to the remote terminal device on a sidelink (or a non-3GPP link). The delay may further include a delay of transmission between the remote terminal device and the relay terminal device or a time interval (an average value or a delay of a single piece of data) from a moment at which the relay terminal device receives the data packet to a moment at which the relay terminal device acknowledges that the remote terminal device has successfully received the data packet. The delay in forwarding the data packet may be a delay of a specific data packet or an average value of delays of data packets on a specific radio bearer in a period of time. Optionally, a unit of the delay may be a quantity of slots.
- Available buffered data volume or occupied buffered data volume on the relay terminal device side (available/desired L2 buffer at the relay UE or occupied buffer size)
- Buffer not available indication or congestion indication (L2 buffer not available indication/congestion indication)
- Data transmission rate desired by the relay terminal device (desired data rate for bearer)

### 2. Indication occasion

a. The relay terminal device performs periodic indication, where a periodicity may be configured by the network device.
b. Sending of a congestion control message is triggered when the relay terminal device meets a trigger condition. The trigger condition may be specific to the delay in forwarding the data packet by the relay terminal device for the remote terminal device or a volume of buffered data on the relay terminal device side. For example, a threshold thres1/threshold thres2 is configured. When the delay in forwarding the data packet by the relay terminal device for the remote terminal device is greater than thres1, and/or the available buffered data volume on the relay terminal device side is less than thres2, the relay terminal device triggers the congestion control message. The threshold configuration in this case is specific to a single remote terminal device. This is different from the case 1.
c. The relay terminal device sends a congestion control message based on a request of the remote terminal device. In an example, the remote terminal device requests, based on a volume of data sent to the relay terminal device, the relay terminal device to send the congestion indication information. For example, when a volume of data sent by the remote terminal device to the relay terminal device starting from a specific moment exceeds a specific threshold, the request is sent to the relay terminal device.

### 3. Message carrying mode

The congestion indication information may be carried in an SRAP control PDU or a sidelink RRC message to be indicated to the remote terminal device. This is similar to the foregoing.

### 4. Indication message delivery

Refer to a corresponding solution in the case 1. The manners b to d are applicable to this case.

### Case 3: The relay terminal device indicates information at the granularity of the PC5 relay RLC channel.

### 1. Indicated content

The relay terminal device relays and forwards downlink data to the remote terminal device through a PC5 relay RLC channel. In a scenario with an SRAP layer, one PC5 relay RLC channel may carry a plurality of radio bearers for the remote terminal device.

If the relay terminal device indicates congestion indication information at the granularity of the PC5 relay RLC channel, the indication information of the relay terminal device needs to include identification information of the PC5 relay RLC channel, to indicate the specific PC5 relay RLC channel corresponding to the congestion indication information. The congestion indication information may include one or more of the following, and the following information is specific to a specific PC5 relay RLC channel.
- Delay in forwarding a data packet by the relay terminal device for the remote terminal device
- Available buffered data volume or occupied buffered data volume on the relay terminal device side (available/desired L2 buffer at the relay UE or occupied buffer size)
- Buffer not available indication or congestion indication (L2 buffer not available indication/congestion indication)
- Data transmission rate desired by the relay terminal device (desired data rate for bearer)

### 2. Indication occasion

a. The relay terminal device periodically sends the indication information to the remote terminal device, where a periodicity may be configured by the network device.
b. The reporting is triggered when the relay terminal device meets a trigger condition. For example, a threshold thres1 and/or a threshold thres2 are/is configured. When the delay in forwarding the data packet by the relay terminal device for the remote terminal device is greater than thres1, and/or the available buffered data volume on the relay terminal device side is less than thres2, the relay terminal device triggers the indication of the message. The threshold configuration in this case is specific to a single PC5 relay RLC channel. This is different from the solution in the case 1.

### 3. Message carrying mode

The congestion indication information may be carried in an SRAP control PDU or a sidelink RRC message to be indicated to the remote terminal device. This is similar to the foregoing. In addition, based on different granularities, the relay terminal device may indicate congestion indication information for a single PC5 relay RLC channel or a plurality of PC5 relay RLC channels. The indication message carries a PC5 relay RLC channel identifier to indicate a specific PC5 relay RLC channel corresponding to the information. For example, the congestion control message may carry (PC5 relay RLC channel ID 1, congestion indication information 1, PC5 relay RLC channel ID 2, congestion indication information 2, ..., PC5 relay RLC channel ID n, congestion indication information n).

### 4. Delivery of the reported message

Refer to a corresponding solution in the case 1. The manners b to d are applicable to this case.

In this embodiment, a problem of signaling overheads also needs to be considered. The signaling overheads may be reduced by reducing signaling content and a quantity of indication times. This is similar to Embodiment 1. In a possible implementation, a timer is set on the relay terminal device side to limit a time interval at which the relay terminal device sends the indication information to the remote terminal device, where the timer is set for a specific remote terminal device. Alternatively, a threshold for the delay or a threshold for the available buffered data volume may be set. The indication of the congestion indication information corresponding to the radio bearer, the PC5 relay RLC channel, or the remote terminal device is triggered only when the delay and the available buffered data volume both exceed the thresholds. In addition, a time interval between two consecutive times of sending congestion indication information by the relay terminal device is further restricted. In another possible implementation, the relay terminal device may send only one piece of indication information indicating whether the congestion occurs, namely, the foregoing buffer not available indication or congestion indication, and does not need to send specific data transmission related information to the remote terminal device, to reduce a size of the congestion indication information.

After the remote terminal device receives the congestion indication information indicated by the relay terminal device, for a radio bearer for which PDCP split is configured, the remote terminal device may reduce a volume of data offloaded onto an indirect link, and offload more data onto a direct link. Therefore, the network device may indicate a radio bearer type to the relay terminal device, and the relay terminal device indicates congestion indication information only for the radio bearer for which the PDCP split is configured. Alternatively, the network device may explicitly indicate, to the relay terminal device, which radio bearer enables statistics collection and indication of congestion indication information.

In the solution in which the relay terminal device performs indication at the granularity of the PC5 relay RLC channel, if it is found that congestion occurs on a corresponding PC5 relay RLC channel and a radio bearer for which PDCP split is configured is multiplexed on the PC5 relay RLC channel, the remote terminal device can also reduce data offloaded onto the PC5 relay RLC channel. In this solution, the network device may indicate, to the relay terminal device, a specific PC5 relay RLC channel for which the relay terminal device needs to send a congestion control indication to the remote terminal device.

The remote terminal device may receive data receiving indication information sent by the network device, to determine a congestion status on the relay terminal device side. This is similar to Embodiment 3. Manners of triggering the network device to send the data receiving indication information to the remote terminal device may be as follows:
- The relay terminal device indicates the network device to send, to the remote terminal device, data receiving indication information for one or more radio bearers corresponding to the remote terminal device. Specifically, the relay terminal device may indicate ID information of the remote terminal device or indicate an ID of the remote terminal device and ID information of the radio bearer to the network device.
- The network device sends the data receiving indication information to the remote terminal device based on a specific periodicity.
- The network device sends the data receiving indication information to the remote terminal device based on a request of the remote terminal device.

In an uplink transmission process, congestion may also occur on the remote terminal device side. An upper-layer application of the remote terminal device generates data, and delivers the data to a bottom layer for transmission on a direct link and an indirect link. If the remote terminal device fails to obtain a transmission resource on a Uu interface or a sidelink in a timely manner, the congestion may occur on the remote terminal device side.

When uplink data transmission is performed on the Uu interface, the remote terminal device reports a volume of buffered data on the remote terminal device side by using a BSR. However, in a conventional technology, the remote terminal device reports only a volume of buffered data at a granularity of a logical channel group (where one logical channel group includes a plurality of logical channels, and one logical channel on the Uu interface of the remote terminal device is associated with one radio bearer), and the network device cannot learn of information at the granularity of the radio bearer and perform congestion control. In a possible enhanced manner, the remote terminal device reports buffer status indication information at the granularity of the radio bearer, that is, the reported buffer status indication information includes (radio bearer identifier, volume of buffered data) information. To reduce overheads, when the volume of buffered data exceeds a specific value, a volume of buffered data at the granularity of the radio bearer may be reported, or a buffer not available indication or congestion indication information at the granularity of the radio bearer may be sent.

When uplink data transmission is performed on the sidelink, if the remote terminal device operates in a mode 1, the remote terminal device reports a volume of buffered data for a logical channel group by using buffer status indication information for the sidelink, to request a sidelink resource from the network device. If a resource allocated by the network device cannot meet a transmission requirement of buffered data, congestion occurs on the remote terminal device on the sidelink. In a possible manner, the remote terminal device reports volume-of-buffered-data information at the granularity of the radio bearer or reports congestion control indication information at the granularity of the radio bearer, so that the network device can perform congestion control.

If the remote terminal device operates in the mode 1, the remote terminal device needs to autonomously select a transmission resource on the sidelink. If the remote terminal device cannot obtain the transmission resource in a timely manner, congestion may occur. In this case, the remote terminal device may report (directly through the Uu interface, or through the relay terminal device) congestion indication information of the remote terminal device to the network device, to indicate that congestion occurs on a corresponding radio bearer.

In this embodiment, the solution in which the relay terminal device side sends congestion indication information of different granularities to the remote terminal device is designed for the uplink data transmission of the remote terminal device, to enable the remote terminal device to perform traffic control, to avoid congestion in the data transmission. In R17 SL relay, transmission of relayed data completely depends on a static configuration of a progress. In addition, after the network device completes configuration, if congestion occurs in data transmission, the network device cannot be directly aware of the congestion. Different from the mechanism in the R17 SL relay, this embodiment may enable the relay terminal device to send the congestion indication information to the remote terminal device periodically, in a condition-triggered manner, or based on the request of the network device, to optimize the uplink data transmission of the remote terminal device.

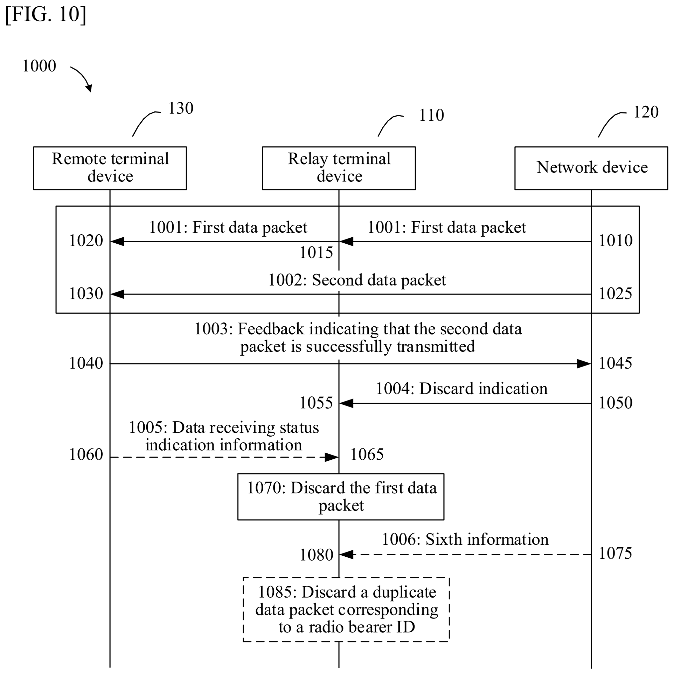

FIG. 10 is a fifth diagram of signaling exchange in a congestion control process according to some embodiments of this application. For clarity of discussion without any limitation, the process 1000 is discussed with reference to FIG. 1A.

In the process 1000, the network device 120 sends a first data packet 1001 to the remote terminal device 130 through the relay terminal device 110 in 110 and sends a second data packet 1002 to the remote terminal device 130 in 1025, where the first data packet 1001 is the same as the second data packet 1002. On the other side, after the remote terminal device 130 receives, in 1020, the first data packet 1001 forwarded by the relay terminal device 110, the remote terminal device 130 sends, to the network device 120 in 1040, feedback 1003 indicating that the second data packet is successfully transmitted.

As shown in FIG. 10, after receiving, in 1045, the feedback 1003 indicating that the second data packet is successfully transmitted, the network device 120 sends a discard indication 1004 to the relay terminal device in 1055, where the discard indication 1004 includes discard information for the first data packet 1001 that is the same as the successfully transmitted second data packet 1002.

In some embodiments, the discard indication 1004 includes an identifier ID of the remote terminal device, a radio bearer ID, or sequence number information of the first transmitted data packet. In some embodiments, the discard indication further includes a number of radio bearers. In some embodiments, the network device sends, to the relay terminal device, a second indication indicating a sequence number length. In some embodiments, the discard indication is generated by a sidelink relay adaptation protocol SRAP layer of the relay terminal device.

In some embodiments, the remote terminal device 130 sends data receiving status indication information 1005 to the relay terminal device 110 in 1060, where the data receiving status indication information 1005 indicates the successfully transmitted second data packet 1002 or indicates whether the remote terminal device successfully receives the second data packet. After receiving the data receiving status indication information 1005 in 1065, the relay terminal device 110 determines, in 1070 based on the data receiving status indication information, the first data packet 1001 to be discarded, where the first data packet 1001 is the same as the second data packet 1002. In some embodiments, the data receiving status indication information includes sequence number information of the successfully transmitted second data packet.

In some embodiments, the network device 120 sends sixth information 1006 to the relay terminal device 110 in 1075, where the sixth information 1006 includes a deactivation indication, the identifier ID of the remote terminal device, or the radio bearer ID. Correspondingly, after receiving the sixth information from the network device in 1080, the relay terminal device 110 discards, in 1085, the duplicate data packet corresponding to the radio bearer ID.

In this manner, the relay terminal device can receive the discard indication from the network device in downlink transmission, and discard the repeated data packet, to reduce data transmission overheads and improve transmission efficiency.

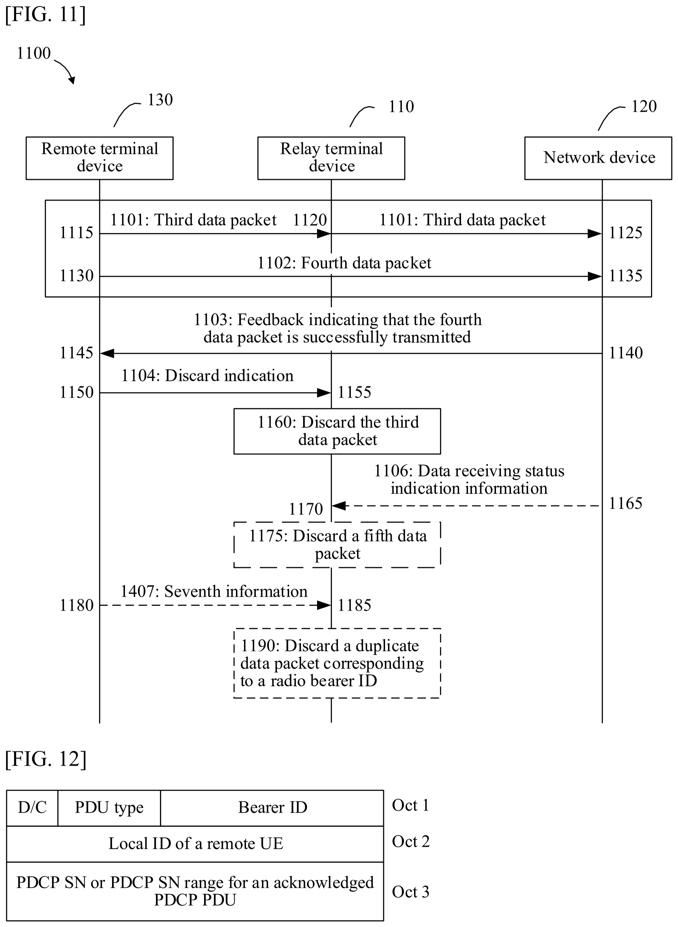

FIG. 11 is a sixth diagram of signaling exchange in a congestion control process according to some embodiments of this application. For clarity of discussion without any limitation, the process 1100 is discussed with reference to FIG. 1A.

In the process 1100, the remote terminal device 130 sends a third data packet 1101 to the network device through the relay terminal device 110 in 1115, and sends a fourth data packet 1102 to the network device 120 in 1130, where the third data packet is the same as the fourth data packet. Correspondingly, the network device 120 receives, in 1125, the third data packet 1101 forwarded by the relay terminal device 110, and receives the fourth data packet 1102 from the network device in 1135.

As shown in the figure, the network device 120 sends, to the remote terminal device 130 in 1140, feedback 1103 indicating that the fourth data packet is successfully transmitted. After receiving, in 1145, the feedback 1103 that is from the network device 120 and that indicates that the fourth data packet is successfully transmitted, the remote terminal device 130 sends a discard indication 1104 to the relay terminal device 110 in 1150, where the discard indication includes discard information for the third data packet.

In some embodiments, the discard indication includes: an identifier ID of the remote terminal device, a radio bearer ID, sequence number information of the first transmitted data packet, or repeated-data-packet information for a radio bearer. In some embodiments, the discard indication is generated by a sidelink relay adaptation protocol SRAP layer of the relay terminal device.

As shown in FIG. 11, after receiving the discard indication 1104 from the remote terminal device 130 in 1155, the relay terminal device 110 discards the third data packet in 1160.

In some embodiments, the network device 120 sends data receiving status indication information 1106 to the relay terminal device 110 in 1165, where the data receiving status indication information 1106 indicates a successfully transmitted sixth data packet. After receiving the radio link control data receiving status indication information 1106 in 1170, the relay terminal device 110 discards a fifth data packet in 1175 based on the data receiving status indication information 1106, where the fifth data packet is the same as the sixth data packet. In some embodiments, the data receiving status indication information includes sequence number information of the successfully transmitted sixth data packet.

In some embodiments, the remote terminal device 130 sends seventh information 1107 to the relay terminal device 110 in 1180, where the seventh information includes a deactivation indication, the identifier ID of the remote terminal device, or a radio bearer ID; and it is determined, based on the seventh information, to discard a duplicate data packet corresponding to the radio bearer ID. After receiving the seventh information from the remote terminal device 130 in 1185, the relay terminal device 110 discards, in 1190, the duplicate data packet corresponding to the radio bearer ID.

In this manner, the relay terminal device can receive the discard indication from the remote terminal device in uplink transmission, and discard the repeated data packet, to reduce data transmission overheads and improve transmission efficiency.

To understand this application more thoroughly and completely, the following describes Embodiment 5 with reference to FIG. 10 and FIG. 11. It should be noted that each part of content in Embodiment 5 may be used independently or randomly combined with content in another embodiment, and is merely used as an example but not intended to limit the protection scope of this application.

### Embodiment 5

This embodiment provides a solution to discarding a PDCP duplicate packet in R18 multi-path relay.

For radio bearer data for which PDCP duplication (PDCP duplication) is configured, a PDCP entity duplicates the data and delivers the data to RLC entities on two Uu links, so that duplicate packets can be sent on the two links. A receive end receives the repeated data packets from corresponding RLC entities on the two links, performs duplicate packet detection at a PDCP layer, and performs delivery to an upper layer after duplicate removal. The PDCP duplication uses transmission resources on two paths as overheads to improve data transmission reliability. To reduce the resource overheads, when an RLC entity on one of the links has acknowledged that the data packet is successfully sent, the PDCP entity of a transmit end may indicate an RLC entity on the other link to discard the corresponding duplicate packet, to reduce data transmission overheads and improve transmission efficiency. To reduce congestion, in the R18 multi-path relay, when the PDCP entity receives a transmission success indication for a specific data packet from an RLC entity on a direct link, and a duplicate data packet has been sent to a relay terminal device, the relay terminal device may be indicated to discard the repeated packet, to reduce forwarding overheads of the relay terminal device.

### 1. Discarding of a duplicate data packet in downlink transmission

In a downlink transmission direction, a PDCP entity of a network device duplicates a data packet, and then delivers data packets to corresponding RLC entities on two links, so that the duplicate packets are sent to a remote terminal device through a direct link and delivered to the relay terminal device for relay and forwarding. If an RLC entity on the network device side on the direct link has received an RLC ACK feedback (for example, indicated by data receiving status indication information) for the data packet, that is, an RLC entity of the remote terminal device has successfully received the data packet and indicated the data packet to a PDCP layer, the network device may indicate the successfully transmitted data packet to the relay terminal device, to indicate the relay terminal device to discard the repeatedly transmitted data packet.

Indication information sent by the network device to the relay terminal device may include an ID of the remote terminal device, a radio bearer ID, and a sequence number of the successfully transmitted data packet (where for example, the sequence number may include a PDCP SN of one or more data packets) or a sequence number range of the successfully transmitted data packet (for example, a start PDCP SN and an end PDCP SN of successfully transmitted data packets). Specifically, the ID of the remote terminal device may be a local ID of the remote terminal device or an index allocated by the network device. The radio bearer ID may be a radio bearer ID. In addition, when the sequence number is the PDCP SN, after receiving a data packet, the relay terminal device needs to identify a PDCP SN of each received data packet. Therefore, the relay terminal device further needs to know a PDCP SN length for a corresponding bearer, to read a PDCP header. Optionally, the network device may indicate a PDCP SN for the radio bearer to the relay terminal device.

The network device may send the indication information to the relay terminal device by using an SRAP control PDU. A transmission manner and a format design of the SRAP control PDU are described above based on different indication information (for a single bearer, a single remote terminal device, or a plurality of remote terminal devices) that is carried.

Optionally, the remote terminal device copies a data receiving success status (for example, a sequence number of a successfully received data packet, where the sequence number may be a PDCP SN of the successfully received data packet) on a Uu link, to send the data receiving success status to the relay terminal device, and the relay terminal device autonomously determines, based on the data receiving success status, which duplicate data packet can be discarded.

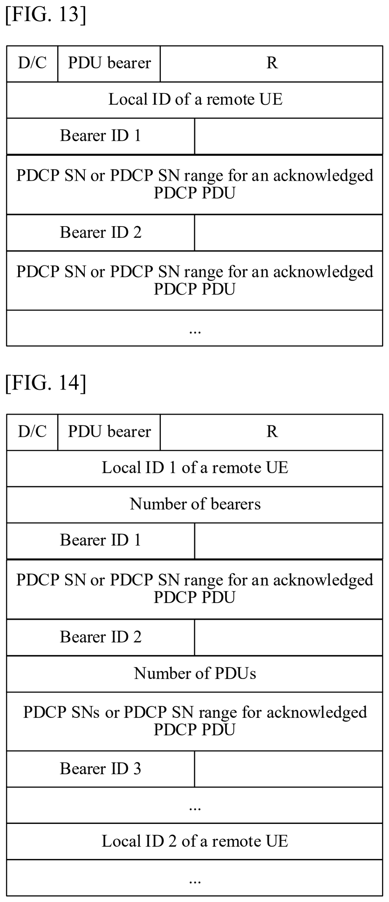

The packet discard indication information is sent to the relay terminal device in a form of the SRAP control PDU. Based on different bearer granularities, the SRAP control PDU is designed in three manners. FIG. 12 to FIG. 14 respectively show three example formats of an SRAP control PDU according to some embodiments of this application. FIG. 12 shows that the SRAP control PDU carries indication information for a single radio bearer. FIG. 13 shows that the SRAP control PDU carries indication information for a plurality of radio bearers for a single remote terminal device. FIG. 14 shows that the SRAP control PDU carries indication information for a plurality of radio bearers for a plurality of remote terminal devices.

D/C indicates whether the data packet is an SRAP control PDU or an SRAP data PDU, and a PDU type indicates a type of the SRAP control PDU.

A PDCP SN or a PDCP SN range for acknowledging a PDCP PDU indicates an SN or a PDCP SN range of a duplicate PDCP PDU.

In a solution in which the repeated PDCP SN is indicated, a specific number of repeated PDCP PDUs are listed in the SRAP control PDU, and a length of each PDCP SN is 12 or 18 bits. Therefore, if there are a large quantity of repeated packets, the SRAP control PDU is very large. In a possible implementation, a number of PDCP PDUs indicated in each SRAP control PDU cannot exceed N, where N is a value configured by the network device or specified in a protocol. Because the number of PDCP SNs carried in the SRAP control PDU is not fixed, a number of indicated PDCP PDUs further needs to be indicated in the SRAP control PDU in correspondence to each radio bearer, as shown in a gray part of the foregoing format of the SRAP control PDU.

In a solution in which the PDCP SN range is indicated, the SRAP control PDU may indicate only SNs of PDCP PDUs that are repeated and consecutively numbered, and indicate a start PDCP PDU number and an end PDCP PDU SN. In another possible implementation, the SRAP control PDU is not necessarily continuous. In this case, the SRAP control PDU may give an indication by segment, for example, indicate ((start PDCP SN 1, end PDCP SN 1), (start PDCP SN 2, end PDCP SN 2), ..., (start PDCP SN x, end PDCP SN x)).

In addition, in the foregoing case, because the number of indicated radio bearers is not fixed, for each remote terminal device, a number of radio bearers for which indication information is carried in the SRAP control PDU should be indicated. It should be understood that, in the present invention, using the PDCP SN as an example to describe the sequence number is merely for ease of understanding, and a specific form of the sequence number is not limited in the present invention.

In another possible implementation, the remote terminal device may send downlink transmission data receiving status indication information on a Uu interface to the relay terminal device, and the relay terminal device autonomously determines, based on the downlink transmission data receiving status indication information, a specific PDCP data PDU that has been received on the remote terminal device side, and therefore may perform discarding.

### 2. Discarding of a duplicate data packet in uplink transmission

The uplink transmission is similar to the downlink transmission. A PDCP entity of a remote terminal device duplicates a data packet, and delivers data packets to corresponding RLC entities on two links, so that the duplicate packets are sent to a network device through a direct link and delivered to the relay terminal device for relay and forwarding. If an RLC entity between the remote terminal device and the network device has received an RLC ACK feedback (indicated by data receiving status indication information), that is, an RLC entity of the remote terminal device has successfully received the data packet and indicated the data packet to a PDCP layer, the remote terminal device may indicate the successfully transmitted data packet to the relay terminal device, to indicate the relay terminal device to discard the repeatedly transmitted data packet.

Indication information sent by the remote terminal device to the relay terminal device may include a radio bearer ID and a PDCP SN of the successfully transmitted data packet (including a PDCP SN of one or more data packets) or a PDCP SN range of successfully transmitted data packets (for example, a start PDCP SN and an end PDCP SN of the successfully transmitted data packets). Specifically, the radio bearer ID may be a radio bearer ID. In addition, after receiving a data packet, the relay terminal device needs to identify a PDCP SN of each received data packet. Therefore, the relay terminal device further needs to know a PDCP SN length for a corresponding bearer, to read a PDCP header. Optionally, the network device or the remote terminal device may indicate a PDCP SN for the radio bearer to the relay terminal device.

The indication information that may be sent by the remote terminal device to the relay terminal device by using an SRAP control PDU or a sidelink RRC message may include repeated-packet information for one radio bearer or repeated-packet information for a plurality of radio bearers. If the SRAP control PDU is used, a format of the SRAP control PDU is similar to the foregoing format 1 and format 2, and an only difference is that the message does not need to carry an ID of the remote terminal device.

In another possible implementation, the network device may send uplink transmission data receiving status indication information on a Uu interface to the relay terminal device, and the relay terminal device autonomously determines, based on the uplink transmission data receiving status indication information, a specific PDCP data PDU that has been received on the remote terminal device side, and therefore discards a repeated packet.

If activation and deactivation of PDCP duplication are supported, and a bearer is configured on the direct link after deactivation, the network device needs to indicate the relay terminal device to discard all buffered duplicate PDCP data PDUs on the bearer. Specifically, the local ID of the remote terminal device, a bearer ID, and a deactivation indication are indicated.

Optionally, the network device may alternatively forward, to the relay terminal device, the data receiving status indication information sent by the remote terminal device. For example, the data receiving status indication information is encapsulated in the SRAP control PDU, and the relay terminal device autonomously determines, based on the data receiving status indication information, a specific data packet that needs to be discarded.

In correspondence to the case in which the activation and deactivation of the PDCP duplication are supported, when the network device deactivates the PDCP duplication and a bearer is configured on the direct link after the deactivation, the network device further needs to indicate the relay terminal device to discard all buffered data corresponding to the bearer. A specific indication may include the ID of the remote terminal device, a bearer ID, and a deactivation indication.

In another possible implementation, if the network device configures the PDCP duplication for a radio bearer, that is, the network device receives uplink data from two links, and when the network device receives the data, if a delay of data received on one link is definitely much greater than that of data received on the other link, or a rate of data received on one link is definitely much lower than that of data received on the other link, it is determined that congestion occurs on a link with worse performance. Alternatively, if the network device configures PDCP split, and PDCP out-of-order is severe, performance of a link on which data with a smaller PDCP SN is sent is worse, and congestion may occur.

Similarly, in a multi-link scenario, a receive end may receive repeated data packets on a plurality of links. When it is acknowledged that a data packet on one of the links is successfully sent, a transmit end may indicate a relay terminal device on a remaining link to discard a corresponding duplicate packet, to reduce data transmission overheads and improve transmission efficiency. It should be understood that quantities of relay terminal devices, remote terminal devices, network devices, and links described in Embodiment 5 are merely for ease of understanding. This is not limited in this application.

For a radio bearer with the PDCP duplication, this embodiment provides a solution in which when a data packet is successfully transmitted on a direct link, a data transmitting side (the remote terminal device in the uplink transmission and the network device in the downlink transmission) indicates the relay terminal device to discard a buffered repeated data packet, to reduce overheads for the PDCP duplication.

In this solution, the PDCP layer of the terminal device or the network device needs to indicate the relay terminal device side to discard a repeated data packet. This is different from an existing mechanism for discarding a repeated packet for a radio bearer for which PDCP duplication is configured.

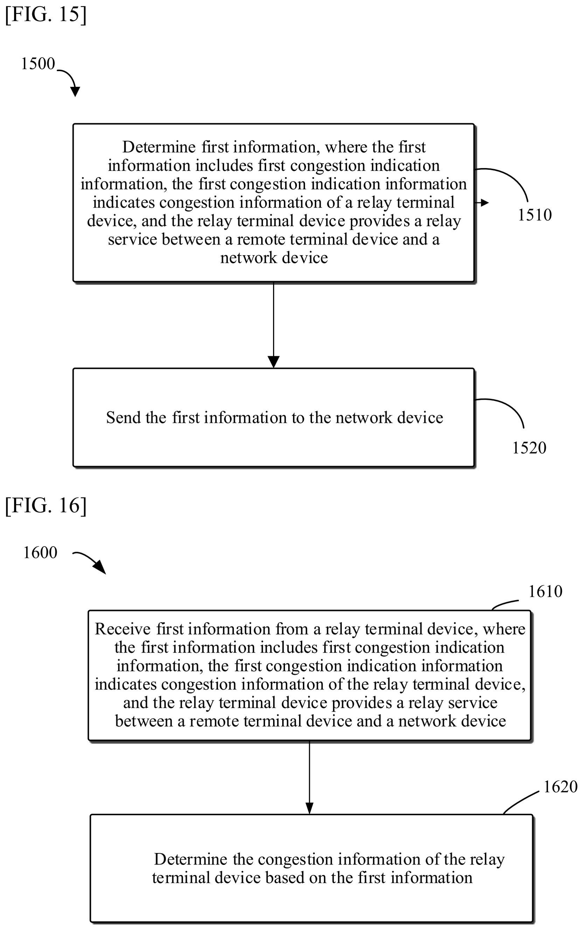

FIG. 15 is a schematic flowchart of a method 1500 implemented at a relay terminal device according to an embodiment of this application. For clarity of discussion without any limitation, the process 1500 is discussed with reference to FIG. 1A. In a possible implementation, the method 1500 may be implemented by the relay terminal device 110 in the communication system 100. In another possible implementation, the method 1500 may alternatively be implemented by another communication device independent of the communication system 100. For example, the following describes the method 1500 by using an example in which the method is implemented by the relay terminal device 110 in the communication system 100.

In a block 1510, the relay terminal device 110 determines first information, where the first information includes first congestion indication information. The first congestion indication information indicates congestion information of the relay terminal device 110, and the relay terminal device 110 provides a relay service between the remote terminal device 130 and the network device 120. In a block 1520, the relay terminal device 110 sends the first information to the network device 120.

In some embodiments, the congestion information includes: sequence number information of a data packet transmitted by the relay terminal device; data transmission delay information of the relay terminal device; buffer indication information of the relay terminal device, where the buffer indication information indicates buffer information of the relay terminal device; or transmission rate information of the relay terminal device.

In some embodiments, the sending the first information to the network device includes the following manners: periodically sending the first information; sending the first information after a first condition is met, where the first condition is configured by the network device, and the first condition is applied to one or both of the following: a data transmission delay or a volume of buffered data on the relay terminal side; or sending the first information in response to a request message from the network device, where the request message indicates the relay terminal device to send the first information.

In some embodiments, the congestion information of the relay terminal device includes congestion information corresponding to the following: a radio bearer for the remote terminal device, where the radio bearer is for data transmission between the remote terminal device and the network device; the relay terminal device; the remote terminal device; or a relay radio link control RLC channel, where the relay radio link control RLC channel is configured by the network device to carry radio bearer data for the remote terminal device between the remote terminal device and the relay terminal device or between the relay terminal device and the network device.

In some embodiments, the first information further includes: a first identifier ID of the remote terminal device, a first ID of the relay terminal device, a first ID of the radio bearer, a first ID of the relay RLC channel, or number indication information corresponding to the radio bearer.

In some embodiments, the relay terminal device sends the first information to the network device through a first bearer, where the first bearer is used by the relay terminal device to forward signaling radio bearer data or data radio bearer data for the remote terminal device. The first bearer includes: an RLC bearer corresponding to the radio bearer indicated by the first information, an RLC bearer with a high priority or an RLC bearer autonomously selected based on an implementation, an RLC bearer corresponding to a signaling radio bearer for the remote terminal device, or a dedicated RLC bearer configured by the network device.

In some embodiments, the first information is generated by a sidelink relay adaptation protocol SRAP layer of the relay terminal device.

In some embodiments, the first message is sent to the network device based on a second condition, where the second condition includes one or more of the following: a data packet forwarding delay meets a third threshold condition; a volume of remaining buffered data meets a fourth threshold condition; or a period of time from previous sending of a first message meets a fifth threshold condition.

In some embodiments, the relay terminal device receives, from the network device or the remote terminal device, a first indication indicating a sequence number length.

In this manner, a set of congestion indication information indication solutions for downlink data transmission for the remote terminal device is designed for a sidelink scenario, to provide a complete solution in terms of reported content, a reporting occasion, a message carrying mode, a message delivery mode, and the like, so that the base station can perform corresponding configuration update or traffic control based on the reported congestion indication information, to avoid or reduce congestion on the relay terminal device.

FIG. 16 is a schematic flowchart of a method 1600 implemented at a network device 120 according to an embodiment of this application. For clarity of discussion without any limitation, the process 1600 is discussed with reference to FIG. 1A. In a possible implementation, the method 1600 may be implemented by the network device 120 in the communication system 100. In another possible implementation, the method 1600 may alternatively be implemented by another communication device independent of the communication system 100. For example, the following describes the method 1600 by using an example in which the method is implemented by the network device 120 in the communication system 100.

In a block 1610, first information is received from the relay terminal device 110, where the first information includes first congestion indication information, the first congestion indication information indicates congestion information of the relay terminal device 110, and the relay terminal device 110 provides a relay service between the remote terminal device 130 and the network device 120. In a block 1020, the network device 120 determines the congestion information of the relay terminal device 110 based on the first information.

In some embodiments, the congestion information includes: sequence number information of a data packet transmitted by the relay terminal device; data transmission delay information of the relay terminal device; buffer indication information of the relay terminal device, where the buffer indication information indicates buffer information of the relay terminal device; or transmission rate information of the relay terminal device.

In some embodiments, the congestion information of the relay terminal device includes congestion information corresponding to the following: a radio bearer for the remote terminal device, where the radio bearer is for data transmission between the remote terminal device and the network device; the relay terminal device; the remote terminal device; or a relay radio link control RLC channel, where the relay radio link control RLC channel is configured by the network device to carry radio bearer data for the remote terminal device between the remote terminal device and the relay terminal device or between the relay terminal device and the network device.

In some embodiments, the first information further includes: a first identifier ID of the remote terminal device, a first ID of the relay terminal device, a first ID of the radio bearer, a first ID of the relay RLC channel, or number indication information corresponding to the radio bearer.

In some embodiments, the network device receives the first information from the relay terminal device through a first bearer, the first bearer is used by the relay terminal device to forward signaling radio bearer data or data radio bearer data for the remote terminal device, and the first bearer includes: an RLC bearer corresponding to the radio bearer indicated by the first information, an RLC bearer with a high priority or an RLC bearer autonomously selected based on an implementation, an RLC bearer corresponding to a signaling radio bearer for the remote terminal device, or a dedicated RLC bearer configured by the network device.

In some embodiments, the first information is generated by a sidelink relay adaptation protocol SRAP layer of the relay terminal device.

In some embodiments, that the network device receives the first information from the relay terminal device includes: A first network unit receives the first information from the relay terminal device. The first network unit sends second information to a second network unit, where the second information includes second congestion indication information associated with the first information, and the second congestion indication information indicates the congestion information of the relay terminal device. In some embodiments, the first network unit generates the second information based on the first information.

In some embodiments, the second information carries congestion information corresponding to the following: the radio bearer for the remote terminal device, where the radio bearer is for the data transmission between the remote terminal device and the network device; the relay terminal device; the remote terminal device; or the relay RLC channel, where the relay radio link control RLC channel is configured by the network device to carry the radio bearer data for the remote terminal device between the remote terminal device and the relay terminal device or between the relay terminal device and the network device.

In some embodiments, the second information further includes a second identifier ID of the remote terminal device, a second ID of the relay terminal device, a second ID of the radio bearer, or a second ID of the RLC channel.

In some embodiments, the second ID of the remote terminal device or the second ID of the relay terminal device is allocated by the first network unit or the second network unit to identify the remote terminal device or the relay terminal device on an interface between the first network unit and the second network unit.

In this manner, a set of congestion indication information indication solutions for downlink data transmission for the remote terminal device is designed for a sidelink scenario, to provide a complete solution in terms of reported content, a reporting occasion, a message carrying mode, a message delivery mode, and the like, so that the base station can perform corresponding configuration update or traffic control based on the reported congestion indication information, to avoid or reduce congestion on the relay terminal device.

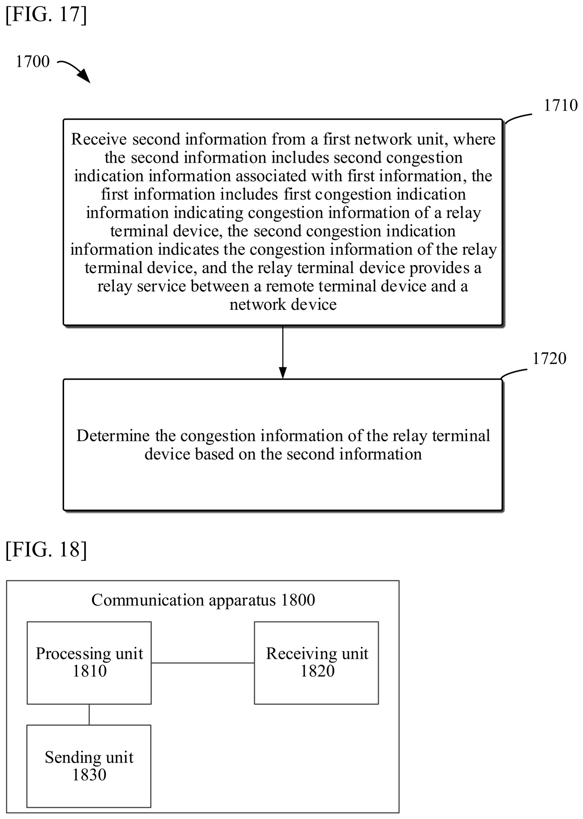

FIG. 17 is a schematic flowchart of a method 1700 implemented at a second network unit 122 according to an embodiment of this application. For clarity of discussion without any limitation, the process 1700 is discussed with reference to FIG. 1A and FIG. 3. In a possible implementation, the method 1700 may be implemented by the second network unit 122 in the communication system 100. In another possible implementation, the method 1700 may alternatively be implemented by another communication device independent of the communication system 100. For example, the following describes the method 1700 by using an example in which the method is implemented by the second network unit 122 in the communication system 100.

In a block 1710, first information is received from the relay terminal device 110, where the first information includes first congestion indication information, the first congestion indication information indicates congestion information of the relay terminal device 110, and the relay terminal device 110 provides a relay service between the remote terminal device 130 and the network device 120. In a block 1720, the network device 120 determines the congestion information of the relay terminal device 110 based on the first information.

In some embodiments, second information carries congestion information corresponding to the following: a radio bearer for the remote terminal device, the relay terminal device, the remote terminal device, or a relay RLC channel.

In some embodiments, the second information further includes one or more of the following: a second identifier ID of the remote terminal device, a second ID of the relay terminal device, a second ID of the radio bearer, or a second ID of the RLC channel.

In some embodiments, the second ID of the remote terminal device or the second ID of the relay terminal device is allocated by the first network unit or the second network unit to identify the remote terminal device or the relay terminal device on an interface between the first network unit and the second network unit.

In this way, a congestion indication information indication solution is extended to a CU-DU split architecture, so that functions can be split, to implement more flexible congestion control.

FIG. 18 is a diagram of a structure of a possible communication apparatus according to an embodiment of this application. These communication apparatuses can implement functions of a first terminal apparatus or a second terminal apparatus in the foregoing method embodiments, and therefore can also implement beneficial effects of the foregoing method embodiments. In this embodiment of this application, the communication apparatus may be the relay terminal device 110, the network device 120, or the remote terminal device 130 shown in FIG. 1, or may be a module (for example, a chip) used in the relay terminal device 110, the network device 120, or the remote terminal device 130.

As shown in FIG. 18, the communication apparatus 1800 includes a processing unit 1810, a receiving unit 1820, and a sending unit 1830. The communication apparatus may be configured to implement functions of the terminal apparatus in the method embodiment shown in FIG. 2, FIG. 3, FIG. 6, FIG. 9, FIG. 10, or FIG. 14. In some embodiments, the processing unit may be a processor, the sending unit may be a transmitter, and the receiving unit may be a receiver.

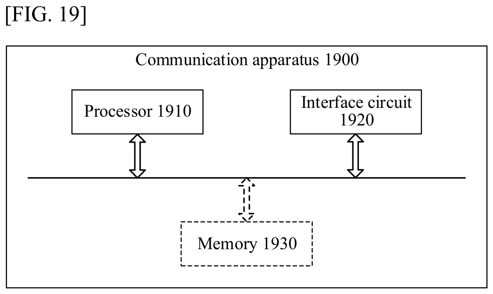

As shown in FIG. 19, a communication apparatus 1900 includes a processor 1910 and an interface circuit 1920. The processor 1910 and the interface circuit 1920 are coupled to each other. It may be understood that the interface circuit 1920 may be a transceiver or an input/output interface. Optionally, the communication apparatus 1900 may further include a memory 1930, configured to: store instructions executed by the processor 1910, store input data needed by the processor 1910 to run the instructions, or store data generated after the processor 1910 runs the instructions.

When the communication apparatus 1900 is configured to implement the method in the foregoing method embodiments, the processor 1910 is configured to perform a function of the processing module 602, and the interface circuit 1920 is configured to perform functions of the receiving unit 1820 and the sending unit 1830.

When the communication apparatus is a chip used in the relay terminal device 110, the network device 120, or the remote terminal device 130, the device chip implements functions of the relay terminal device 110, the network device 120, or the remote terminal device 130 in the foregoing method embodiments. The device chip receives information from another module (for example, a radio frequency module or an antenna) in the relay terminal device 110, the network device 120, or the remote terminal device 130. The information may be sent by another device in the relay terminal device 110, the network device 120, or the remote terminal device 130. Alternatively, the terminal device chip sends information to another module (for example, a radio frequency module or an antenna) in the relay terminal device 110, the network device 120, or the remote terminal device 130. The information is sent to another device in the relay terminal device 110, the network device 120, or the remote terminal device 130.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application provides a communication system. The communication system may include the communication apparatus, for example, the relay terminal device 110, the network device 120, or the remote terminal device 130, in the embodiment shown in FIG. 18. Optionally, the relay terminal device 110, the network device 120, or the remote terminal device 130 in the communication system may perform the communication method shown in any one of FIG. 2, FIG. 3, FIG. 6, FIG. 9, FIG. 10, or FIG. 14.

An embodiment of this application further provides a circuit. The circuit may be coupled to a memory, and may be configured to perform a procedure related to the relay terminal device 110, the network device 120, or the remote terminal device 130 in any one of the foregoing method embodiments. The chip system may include the chip, and may further include another component, for example, a memory or a transceiver.

It should be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another appropriate type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed communication methods and apparatuses may be implemented in other manners. For example, the described apparatus embodiments are merely examples. For example, the division into modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The modules described as separate parts may or may not be physically separate, and parts displayed as modules may or may not be physical modules, that is, may be located in one position, or may be distributed on a plurality of network units. Some or all of the units may be selected based on actual requirements to achieve the objectives of the solutions of embodiments.

In addition, functional modules in embodiments of this application may be integrated into one processing module, each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, the part making contributions, or a part of the technical solutions may be embodied in a form of a software product. The computer software product is stored in a storage medium, and includes a plurality of instructions for instructing a computer device (which may be a personal computer, a server, the network device 120, or the like) to perform all or a part of steps in the methods in embodiments of this application. The foregoing computer-readable storage medium may be any usable medium that can be accessed by a computer. The following provides an example but does not constitute a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another optical disc storage, a disk storage medium or another magnetic storage device, or any other medium that can be used to carry or store expected program code in a form of instructions or a data structure and that can be accessed by a computer.

As used in this specification, the term "include" and similar terms should be understood as open inclusion, that is, "include but not limited to". The term "based on" should be understood as "at least partially based on". The term "an embodiment" or "this embodiment" should be understood as "at least one embodiment". The terms such as "first" and "second" may refer to different objects or a same object, and are merely for distinguishing between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, a database, or another data structure), finding, and the like. In addition, "determining" may include receiving (for example, receiving information), accessing (for example, accessing data in a memory), and the like. Furthermore, "determining" may include parsing, selection, choice, establishment, and the like.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, applied to a relay terminal device and comprising:
determining first information, wherein the first information comprises first congestion indication information, the first congestion indication information indicates congestion information of the relay terminal device, and the relay terminal device provides a relay service between a remote terminal device and a network device; and
sending the first information to the network device.

2. The method according to claim 1, wherein the congestion information comprises one or more of the following:
sequence number information of a data packet transmitted by the relay terminal device;
data transmission delay information of the relay terminal device;
buffer indication information of the relay terminal device, wherein the buffer indication information indicates buffer information of the relay terminal device; or transmission rate information of the relay terminal device.

3. The method according to claim 1 or 2, wherein the sending the first information to the network device comprises one or more of the following:
periodically sending the first information;
sending the first information after a first condition is met, wherein the first condition is configured by the network device, and the first condition is applied to one or both of the following: a data transmission delay or a volume of buffered data on the relay terminal side; or
sending the first information in response to a request message from the network device, wherein the request message indicates the relay terminal device to send the first information.

4. The method according to any one of claims 1 to 3, wherein the congestion information of the relay terminal device comprises congestion information corresponding to one or more of the following:
a radio bearer for the remote terminal device, wherein the radio bearer is for data transmission between the remote terminal device and the network device;
the relay terminal device;
the remote terminal device; or
a relay radio link control RLC channel, wherein the relay radio link control RLC channel is configured by the network device to carry radio bearer data for the remote terminal device between the remote terminal device and the relay terminal device or between the relay terminal device and the network device.

5. The method according to any one of claims 1 to 4, wherein the first information further comprises one or more of the following:
a first identifier ID of the remote terminal device;
a first ID of the relay terminal device;
a first ID of the radio bearer;
a first ID of the relay RLC channel; or
number indication information corresponding to the radio bearer.

6. The method according to any one of claims 1 to 5, wherein the relay terminal device sends the first information to the network device through a first bearer, the first bearer is used by the relay terminal device to forward signaling radio bearer data or data radio bearer data for the remote terminal device, and the first bearer comprises at least one of the following:
an RLC bearer corresponding to the radio bearer indicated by the first information;
an RLC bearer with a high priority or an RLC bearer autonomously selected based on an implementation;
an RLC bearer corresponding to a signaling radio bearer for the remote terminal device; or
a dedicated RLC bearer configured by the network device.

7. The method according to claim 6, wherein the first information is generated by a sidelink relay adaptation protocol SRAP layer of the relay terminal device.

8. The method according to any one of claims 1 to 7, further comprising:
sending the first message to the network device based on a second condition,
wherein the second condition comprises one or more of the following:
a data packet forwarding delay meets a third threshold condition;
a volume of remaining buffered data meets a fourth threshold condition; or
a period of time from previous sending of a first message meets a fifth threshold condition.

9. The method according to any one of claims 1 to 8, further comprising:
receiving, by the relay terminal device from the network device or the remote terminal device, a first indication indicating the sequence number length.

10. A communication method, applied to a network device and comprising:
receiving first information from a relay terminal device, wherein the first information comprises first congestion indication information, the first congestion indication information indicates congestion information of the relay terminal device, and the relay terminal device provides a relay service between a remote terminal device and the network device; and
determining the congestion information of the relay terminal device based on the first information.

11. The method according to claim 10, wherein the congestion information comprises one or more of the following:
sequence number information of a data packet transmitted by the relay terminal device;
data transmission delay information of the relay terminal device;
buffer indication information of the relay terminal device, wherein the buffer indication information indicates buffer information of the relay terminal device; or transmission rate information of the relay terminal device.

12. The method according to claim 10 or 11, further comprising:
sending a request message to the relay terminal device, wherein the request message indicates the relay terminal device to send the first information.

13. The method according to any one of claims 10 to 12, wherein the congestion information of the relay terminal device comprises congestion information corresponding to one or more of the following:
a radio bearer for the remote terminal device, wherein the radio bearer is for data transmission between the remote terminal device and the network device;
the relay terminal device;
the remote terminal device; or
a relay radio link control RLC channel, wherein the relay radio link control RLC channel is configured by the network device to carry radio bearer data for the remote terminal device between the remote terminal device and the relay terminal device or between the relay terminal device and the network device.

14. The method according to any one of claims 10 to 13, wherein the first information further comprises one or more of the following:
a first identifier ID of the remote terminal device;
a first ID of the relay terminal device;
a first ID of the radio bearer;
a first ID of the relay RLC channel; or
number indication information corresponding to the radio bearer.

15. The method according to any one of claims 10 to 14, wherein the network device receives the first information from the relay terminal device through a first bearer, the first bearer is used by the relay terminal device to forward signaling radio bearer data or data radio bearer data for the remote terminal device, and the first bearer comprises at least one of the following:
an RLC bearer corresponding to the radio bearer indicated by the first information;
an RLC bearer with a high priority or an RLC bearer autonomously selected based on an implementation;
an RLC bearer corresponding to a signaling radio bearer for the remote terminal device; or
a dedicated RLC bearer configured by the network device.

16. The method according to claim 15, wherein the first information is generated by a sidelink relay adaptation protocol SRAP layer of the relay terminal device.

17. The method according to any one of claims 10 to 16, wherein the receiving, by the network device, the first information from the relay terminal device comprises:
receiving, by a first network unit, the first information from the relay terminal device; and
sending, by the first network unit, second information to a second network unit, wherein the second information comprises second congestion indication information associated with the first information, and the second congestion indication information indicates the congestion information of the relay terminal device.

18. The method according to claim 17, wherein the first network unit generates the second information based on the first information.

19. The method according to claim 17 or 18, wherein the second information carries congestion information corresponding to one or more of the following:
the radio bearer for the remote terminal device, wherein the radio bearer is for the data transmission between the remote terminal device and the network device;
the relay terminal device;
the remote terminal device; or
the relay RLC channel, wherein the relay radio link control RLC channel is configured by the network device to carry the radio bearer data for the remote terminal device between the remote terminal device and the relay terminal device or between the relay terminal device and the network device.

20. The method according to any one of claims 17 to 19, wherein the second information further comprises one or more of the following:
a second identifier ID of the remote terminal device;
a second ID of the relay terminal device;
a second ID of the radio bearer; or
a second ID of the relay RLC channel.

21. The method according to claim 20, wherein the second ID of the remote terminal device or the second ID of the relay terminal device is allocated by the first network unit or the second network unit to identify the remote terminal device or the relay terminal device on an interface between the first network unit and the second network unit.

22. A communication method, applied to a second network unit and comprising:
receiving second information from a first network unit, wherein the second information comprises second congestion indication information associated with first information, the first information comprises first congestion indication information indicating congestion information of a relay terminal device, the second congestion indication information indicates the congestion information of the relay terminal device, and the relay terminal device provides a relay service between a remote terminal device and a network device; and
determining the congestion information of the relay terminal device based on the second information.

23. The method according to claim 22, wherein the second information carries congestion information corresponding to one or more of the following:
a radio bearer for the remote terminal device, wherein the radio bearer is for data transmission between the remote terminal device and the network device;
the relay terminal device;
the remote terminal device; or
a relay radio link control RLC channel, wherein the relay radio link control RLC channel is configured by the network device to carry radio bearer data for the remote terminal device between the remote terminal device and the relay terminal device or between the relay terminal device and the network device.

24. The method according to claim 22 or 23, wherein the second information further comprises one or more of the following:
a second identifier ID of the remote terminal device;
a second ID of the relay terminal device;
a second ID of the radio bearer; or
a second ID of the RLC channel.

25. The method according to claim 20, wherein the second ID of the remote terminal device or the second ID of the relay terminal device is allocated by the first network unit or the second network unit to identify the remote terminal device or the relay terminal device on an interface between the first network unit and the second network unit.

26. A communication apparatus, used in a relay terminal device and comprising:
a determining unit, configured to determine first information, wherein the first information comprises first congestion indication information, the first congestion indication information indicates congestion information of the relay terminal device, and the relay terminal device provides a relay service between a remote terminal device and a network device; and
a sending unit, configured to send the first information to the network device.

27. A communication apparatus, used in a network device and comprising:
a receiving unit, configured to receive first information from a relay terminal device, wherein the first information comprises first congestion indication information, the first congestion indication information indicates congestion information of the relay terminal device, and the relay terminal device provides a relay service between a remote terminal device and the network device; and
a determining unit, configured to determine the congestion information of the relay terminal device based on the first information.

28. A communication apparatus, used in a second network unit and comprising:
a receiving unit, configured to receive second information from a first network unit, wherein the second information comprises second congestion indication information associated with first information, the first information comprises first congestion indication information indicating congestion information of a relay terminal device, the second congestion indication information indicates the congestion information of the relay terminal device, and the relay terminal device provides a relay service between a remote terminal device and a network device;
and
a determining unit, configured to determine the congestion information of the relay terminal device based on the second information.

29. A communication system, comprising a relay terminal device for performing the method according to any one of claims 1 to 9, a network device for performing the method according to any one of claims 10 to 21, or a second network unit for performing the method according to any one of claims 22 to 25, wherein the communication system is configured to implement the method according to any one of claims 1 to 25 by using the relay terminal device, the network device, and the second network unit.

30. A communication apparatus, comprising a processor and a memory storing instructions, wherein when the instructions are executed by the processor, the communication device is enabled to perform the method according to any one of claims 1 to 9, any one of claims 10 to 21, or any one of claims 22 to 25.

31. A chip, wherein the chip comprises a processing circuit, and the processing circuit is configured to perform the method according to any one of claims 1 to 9, any one of claims 10 to 21, or any one of claims 22 to 25.

32. A computer-readable storage medium, wherein the computer-readable storage medium stores instructions; and when the instructions are executed by a communication device, the communication device is enabled to perform the method according to any one of claims 1 to 9, any one of claims 10 to 21, or any one of claims 22 to 25.
